# EUROPEAN PATENT SPECIFICATION

(11) **EP 4 018 179 B1**
(45) Date of publication and mention of the grant of the patent: **24.12.2025**
(21) Application number: 20768143.8
(22) Date of filing: 19.08.2020
(51) Int. Cl.: G01N 15/14, G01N 21/53, G01N 35/08, G01N 35/10

(54) **SYSTEM AND METHOD FOR SEPARATION GAS DETECTION BETWEEN SAMPLES**
SYSTEM UND VERFAHREN ZUR TRENNGASERKENNUNG ZWISCHEN DEN PROBEN
SYSTEME ET PROCEDE DE DETECTION DE GAZ DE SEPARATION ENTRE ECHANTILLONS

(30) Priority: 19.08.2019 US 201916544842
(43) Date of publication of application: 29.06.2022
(73) Proprietor: Sartorius BioAnalytical Instruments, Inc., Bohemia, NY 11716 (US)
(72) Inventor: KENNINGTON, Aaron Bryce, Albuquerque, NM 87104 (US)
(74) Representative: Novagraaf International SA
(86) International application number: PCT/US2020/047031
(87) International publication number: WO 2021/034948

(56) References cited:
- EP-A1- 3 514 518
- WO-A1-2017/214250
- US-A1- 2004 065 143
- US-A1- 2018 356 330
- US-B2- 10 302 533

## Description

### BACKGROUND

High-throughput flow cytometry systems use a pump system to fill a sample tubing line with a stream of discrete sample particle suspensions aspirated from wells of a microplate and separated one from the other by air bubble gaps. The entire sample stream is continuously delivered to the flow cytometer so that data from all the samples in the microplate are acquired and stored in a single data file. A high resolution time parameter is also recorded during data acquisition. Temporal gaps in particle detection are created in the data stream by the passage of the air gaps, allowing the individual particle suspensions to be distinguished and separately evaluated when plotted in conjunction with the time parameter. Based on this temporal distribution, data peaks are identified and assigned to individual wells of the microplate. However, in many cases, these temporal distributions are not sufficient to accurately identify individual sample wells, and identification errors sometimes occur.

Publications WO 2017/214250 A1, US 2004/065143 A1, US 10 302 533 B2, US 2018/356330 A1, EP 3 514 518 A1 disclose related prior art.

### SUMMARY

Methods and systems for detecting air bubbles in a continuous fluidic stream of samples separated by air bubbles are disclosed herein. In one example, the scatter waveform output of the scatter detector of the flow cytometer is used to detect the air bubbles.

Some embodiments of the present disclosure provide a method for: generating, with a scatter detector, a voltage output signal as a flow stream comprising a plurality of samples, each sample separated by a separation gas, passes through a flow cytometer for a period of time; sampling the voltage output signal; and recording a timestamp and a voltage value for each sampled voltage of the voltage output signal that is greater than a separation gap threshold. The method may further include the steps of: prior to the generating step, moving the plurality of samples comprising particles into the flow stream; inserting the separation gas between adjacent ones of said plurality of samples to separate said samples from each other in said flow stream, said flow stream thereby constituting a gas-separated sample flow stream; guiding said fluid-separated sample flow stream including the separated samples and the separation fluid to and through the flow cytometer; and continuously operating the flow cytometer to focus the gas-separated flow stream and to detect scattered light by the scatter detector as the fluid flow stream passes through the flow cytometer. In further embodiments, the method may include the step of: prior to the moving step, obtaining a plurality of samples from a plate having a plurality of sample wells, wherein each sample of the plurality of samples is obtained from a respective well of the plurality of wells.

Embodiments of the present disclosure further include a non-transitory computer readable medium having stored therein instructions that are executable to cause a processor to perform the methods described herein.

Further embodiments of the present disclosure include a system comprising: a flow cytometer comprising a scatter detector; a processor in communication with the output of the scatter detector; and a non-transitory computer readable medium having stored therein instructions that are executable to cause the processor to perform the methods described herein.

### BRIEF DESCRIPTION OF THE DRAWINGS

FIG. 1A is a schematic view of a flow cytometry apparatus.
FIG. 1B is a cross-sectional schematic view of immediately adjacent samples in a conduit of the flow cytometry apparatus of FIG. 1A.
FIG. 2 illustrates an example plot of a sample event waveform output from a forward scatter detector.
FIG. 3 illustrates an example plot of an air bubble gap waveform output from a forward scatter detector.
FIG. 4 illustrates an example histogram of sample event data of pre-plate prime air bubbles, the first row A of the sample plate with inter-row shake, and the first two wells of row B of the sample plate, acquired from the flow cytometer plotted with separation gas timing output data acquired from the forward scatter detector of the flow cytometer.
FIG. 5 is a zoomed-in view of a portion of FIG. 4.
FIG. 6 is a zoomed-in view of a portion of FIG. 4.
FIG. 7 illustrates an example histogram of sample event data of a full 96-well plate acquired from the flow cytometer plotted with separation gas timing output data acquired from the forward scatter detector of the flow cytometer.
FIG. 8 illustrates an example histogram of sample event data of a processed FSC-A output acquired from the flow cytometer plotted with separation gas timing output data acquired from the forward scatter detector of the flow cytometer.
FIG. 9 illustrates an example histogram of sample event data of a processed SSC-A output acquired from the flow cytometer plotted with separation gas timing output data acquired from the side scatter detector of the flow cytometer.
FIG. 10 illustrates is a schematic view of an alternative arrangement of a flow cytometry apparatus, according to one example embodiment.
FIG. 11 illustrates a flow chart of a method for detecting a separation gas in a fluid flow stream, according to one example embodiment.
FIG. 12 illustrates is a schematic view of another alternative arrangement of a flow cytometry apparatus, according to one example embodiment.
FIG. 13 illustrates a flow chart of a method for forming a gas-separated sample fluid flow stream, according to one example embodiment.

### DETAILED DESCRIPTION

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to." Words using the singular or plural number also include the plural and singular number, respectively.

The description of embodiments of the disclosure/examples is not intended to be exhaustive or to limit the disclosure to the precise form disclosed. While the specific embodiments of, and examples for, the disclosure are described herein for illustrative purposes, various modifications are possible within the scope of the invention as defined by the appended claims.

All embodiments of any aspect of the invention can be used in combination, unless the context clearly dictates otherwise.

For the purposes of the present invention, the term "sample" as used herein refers to any quantity of liquid which may contain particles of interest or marker particles that are detectable by a particle analyzer. More specifically a sample may include a fluid solution or suspension containing particles of interest or marker particles to be detected and/or analyzed using a method and/or apparatus disclosed herein. The particles of interest in a sample may be tagged, such as with a fluorescent tag. The particles of interest may also be bound to a bead, a receptor, or other useful protein or polypeptide, or may just be present as free particles, such as particles found naturally in a cell lysate, purified particles from a cell lysate, particles from a tissue culture, etc. The sample may include chemicals, either organic or inorganic, used to produce a reaction with the particles of interest. When the particles of interest are biomaterials, drugs may be added to the samples to cause a reaction or response in the biomaterial particles. The chemicals, drugs or other additives may be added to and mixed with the samples when the samples are in sample source wells or the chemicals, drugs or other additives may be added to the samples in the fluid flow stream after the samples have been uptaken by the autosampler.

As used herein, the term "biomaterial" refers to any organic material obtained from an organism, either living or dead. The term "biomaterial" also refers to any synthesized biological material such as synthesized oligonucleotides, synthesized polypeptides, etc. The synthesized biological material may be a synthetic version of a naturally occurring biological material or a non-naturally occurring biological made from portions of naturally occurring biological materials, such as a fusion protein, or two biological materials that have been bound together, such as an oligonucleotide, such as DNA or RNA, bound to a peptide, either covalently or noncovalently, that the oligonucleotide does not normally bind to in nature.

As used herein, the term "oligonucleotide" refers to any oligonucleotide, including double and single-stranded DNA, RNA, PNAs (peptide nucleic acids) and any sequence of nucleic acids, either natural or synthetic, derivatized or underivatized.

As used herein, "peptide" refers to all types of peptides and conjugated peptides including: peptides, proteins, polypeptides, protein sequences, amino acid sequences, denatured proteins, antigens, oncogenes and portions of oncogenes.

As used herein, the term "organism" refers not only to animals, plants, bacteria, viruses, etc. but also to cell cultures, reproduced oligonuncleotides, etc. made from organic material obtained from animals, plants, bacteria, viruses, etc.

As used herein, the term "drug" refers to any type of substance that is commonly considered a drug. A drug may be a substance that acts on the central nervous system of an individual, e.g. a narcotic, hallucinogen, barbiturate, or a psychotropic drug. For the purposes of the present invention, a drug may also be a substance that kills or inactivates disease-causing infectious organisms. In addition, a drug may be a substance that affects the activity of a specific cell, bodily organ or function. A drug may be an organic or inorganic chemical, a biomaterial, etc.

As used herein, an "aliquot" is a sip of a sample taken from a well via a probe of a flow cytometer.

As used herein, the term "conduit" refers to device such as a tube, channel, etc. through which a fluid stream flows. A conduit may be composed of several separate devices, such as a number of connected or joined pieces of tubing or a single piece of tubing, alone or in combination with channels or other different devices. In various embodiments, a conduit may include any tube that may be used with a peristaltic pump that has compression characteristics that allow a peristaltic pump to move samples separated by a separation gas or aliquots of marker particles through the tube at a speed of at least 6 samples per minute without causing adjacent samples to mix with each other.

As used herein "marker particles" may include control particles, beads or micro beads and further refers to one or more particles detectable by a flow cytometer system (for example, a system as described in U.S. Pat. No. 6,878,556 and WO2010005617) that may uptake from a sample container an aliquot of a sample suspected of having therein particles of interest to be analysed.

For the purposes of the present invention, the term "particles" as used herein refers to small objects that may be present in a sample and detected using a flow cytometry apparatus, including, but not limited to biological particles, such as molecules, cells, proteins, protein aggregates, cellular components such as nuclei, and mitochondrion, organisms, including microbes and viruses, microspheres, microbeads, and synthetic particles, such as chemical compounds and chemical aggregates, etc.

For the purposes of the present invention, the term "sample" refers to a fluid solution or suspension which may contain particles of interest.

For the purposes of the present invention, the term "well" as used herein refers to any structure which contains a sample to be analysed, a control or an aliquot of marker particles.

For the purposes of the present invention, the terms "plate," "microplate," and "microtiter plate" as used herein refer to a structure which contains a sample to be analysed, a control, or an aliquot of marker particles.

For the purposes of the present invention, the term "about" means +/- 5% of the recited parameter.

For the purposes of the present invention, the term "detector" refers to any detector capable of detecting scattered light, including photomultiplier tubes (PMTs) and single-photon avalanche diodes (SPADs).

For the purposes of the present invention, the term "separation gas" refers to any gas such as air, an inert gas, or fluid etc. that can be used to form a gas bubble or immiscible fluid between adjacent samples or between a sample and a buffer fluid. An immiscible fluid is a fluid that will not substantially mix with and contaminate a sample.

For the purposes of the present invention, the term "adjacent samples" refers to two samples in a fluid flow stream that are separated from each other only by a separation gas, such as an air bubble.

For the purposes of the present invention, the term "flow cytometer" includes any flow cytometry apparatus, including, but not limited to, the flow cytometers are described in U.S. Pat. Nos. 5,895,764; 5,824,269; 5,395,588; 4,661,913. In the flow cytometer, samples may be sorted on a particle by particle basis using known methods.

As used herein, "coupled" means associated directly as well as indirectly. For example, a member A may be directly associated with a member B, or may be indirectly associated therewith, e.g., via another member C. It will be understood that not all relationships among the various disclosed elements are necessarily represented. Accordingly, couplings other than those depicted in the block diagrams may also exist.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The present disclosure describes a novel system and method for detecting air bubbles in a continuous fluidic stream of samples separated by air bubbles using the scatter waveform output of the flow cytometer detector.

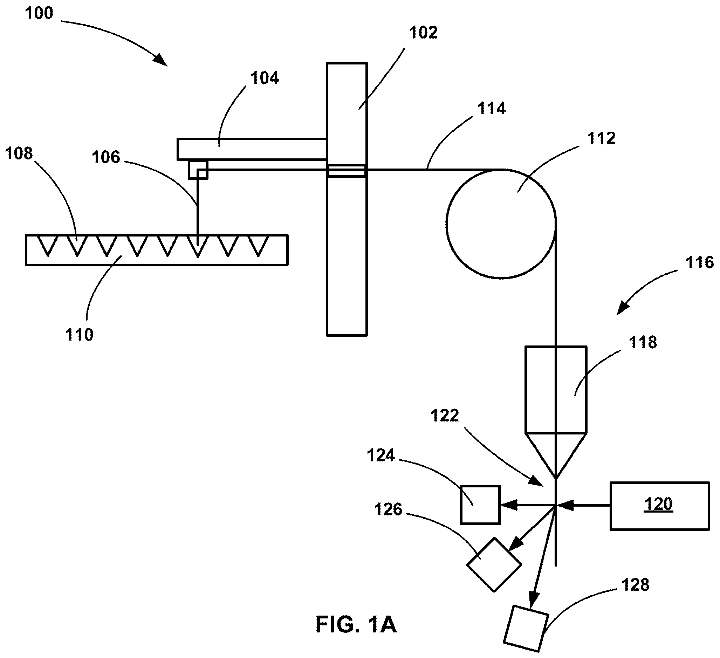

FIG. 1A illustrates an exemplary flow cytometry apparatus 100 for use in connection with the present invention. Flow cytometry apparatus 100 includes a conventional autosampler 102 having an adjustable arm 101 on which is mounted a hollow probe 106. As arm 104 moves back and forth (left and right in FIG. 1A) and side to side (into and out of the plane of FIG. 1A), probe 106 is lowered into individual source wells 108 of a well plate 110 to obtain a sample comprising particles (which may be tagged with a fluorescent tag (not shown in FIG. 1A)) to be analyzed using flow cytometry apparatus 100. In between in-taking sample material from each of source wells 108, probe 106 is allowed to intake aliquots of a separation fluid (such as air), thereby forming a separation bubble between successive samples in the fluid flow stream.

Once a sample is picked up by probe 106, it is introduced into a fluid flow stream and a peristaltic pump 112 forces the sample through a conduit 114 that extends from autosampler 102 through peristaltic pump 112 and into a flow cytometer 116 including a flow cell 118 and a laser interrogation device 120. The flow cell 118 may be continuously operated to focus the fluid flow stream and to analyze the particles in each of the plurality of samples as the fluid flow stream passes through the flow cytometer. Laser interrogation device 120 examines individual samples flowing from flow cell 118 at a laser interrogation point 122.

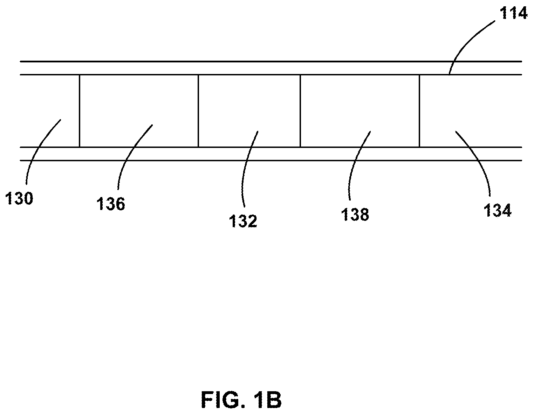

FIG. 1B illustrates series of samples 130, 132 and 134 separated from each other by separation bubbles 136 and 138 in conduit 114, forming a bubble-separated fluid flow stream. In FIG. 1B, sample 130 is immediately adjacent to sample 132, and sample 132 is immediately adjacent to sample 134. When samples 130, 132 and 134 pass through laser interrogation point 122, the particles in the samples are sensed by flow cytometer 116. Forward scattered light is detected by a forward scatter detector 124. Fluorescence emitted from tagged particles in the flow cell is detected by a fluorescence detector 126. Side scattered light is detected by a side scatter detector 128. In contrast, when air bubbles 136 and 138 pass through laser interrogation point 122, no particles are sensed. Therefore, a graph of the data points of fluorescence sensed versus time for a series of samples analyzed using a flow cytometer will form distinct groups, each aligned with the time that a sample containing particles passes through the laser interrogation point. Such graphs can be generated by the output of both the forward scatter detector 124, the fluorescence detector 126, and/or the side scatter detector 128.

Correctly identifying the sample well from which each sample was taken is important in analysis and use of the flow cytometer output data. In some high-throughput flow cytometry system methods, the sampling protocol, including parameters such as the probe sip time (the duration that the probe is in a well), probe up time (the amount of time the probe pauses out of a well to draw in air), multiwell shakes and rinse steps, the sampling order, as well as the height of event peaks and the spacing between them, are used to segment the data file for an entire microtiter plate into individual well data. However, even with utilizing these elements, well identification errors still occur.

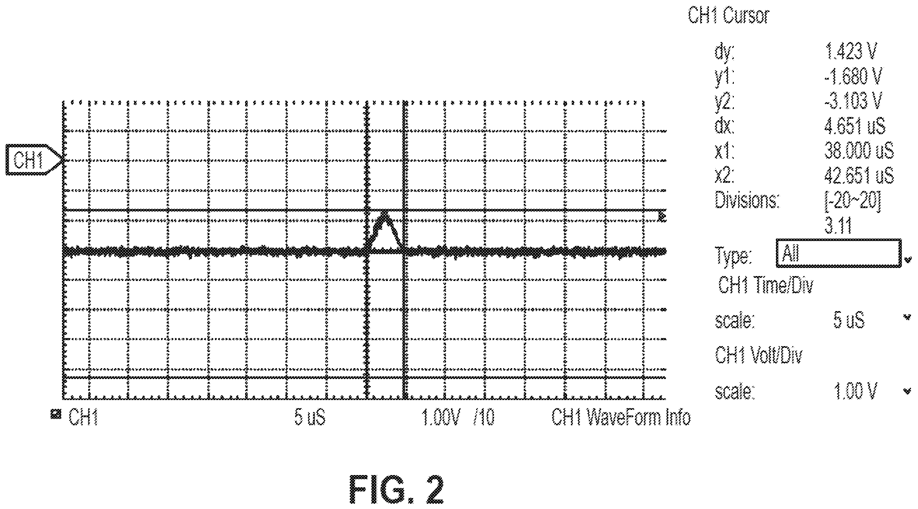

In one embodiment of the present invention, the detection of separation bubble gaps is used in the accurate identification of individual sample wells. This may, in some cases, be used in addition or alternatively to the parameters already used. Separation bubble gaps are identified by analyzing the voltage output signal generated by a scatter detector, such as forward scatter detector 124 or side scatter detector 128, of the flow cytometer as a flow stream with a plurality of separation-gas separated samples passes through the flow cytometer for a period of time. While the samples, each expected to contain particles of interest, in the flow stream are traveling through the flow cytometer flow cell, each event triggered by a particle generates a fairly consistent scatter waveform pattern having a time duration between about 4µs and 10µs and a peak to peak detector voltage output between about 1.4 to 1.6 volts. A sample event waveform obtained via an oscilloscope connected to the forward scatter detector output is shown in FIG. 2.

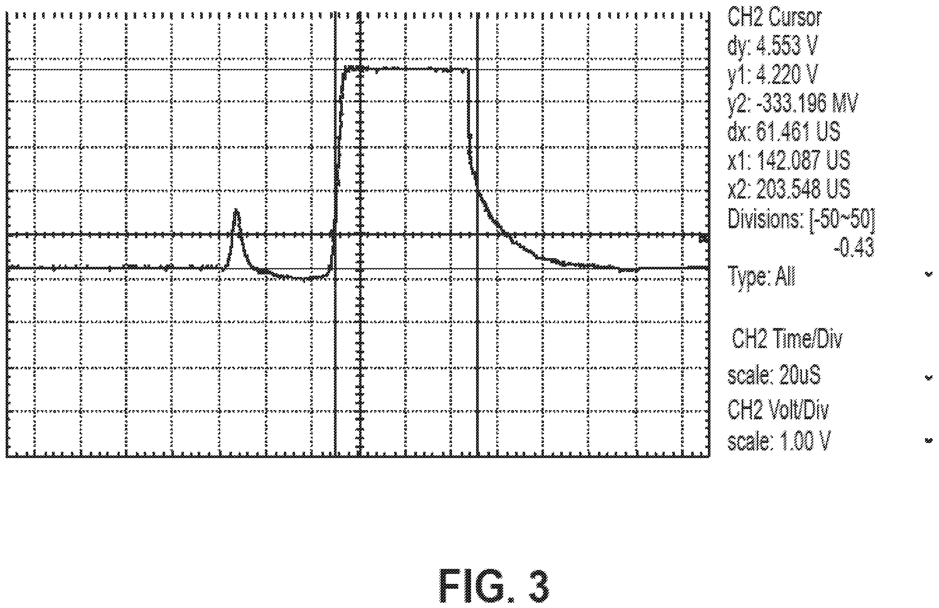

A separation bubble gap following a sample traveling through the flow cytometer flow cell also generates a fairly consistent scatter waveform pattern. The waveform pattern is show in FIG. 3 and has the characteristics of a time duration between 50µs and 90µs, which is about seven to nine times greater than a sample event waveform, and a peak to peak detector voltage output that is between about 4.2 to 4.8 volts, which is three times greater than a sample event waveform. As it goes through the flow cell, an air bubble acts as a mirror, reflecting a large portion of the excitation laser light to the forward scatter detector. This intensity of scattered light causes the detector to output a signal with the maximum voltage, as shown in the waveform.

Using these waveforms, a processor, integrated as part of or in communication with the flow cytometer, analyzes the voltage output over time to match one of the follow signal patterns: background (no event measured), an event measured, or an air bubble measured based on the waveforms described above. These patterns can then be used to identify each source well in the data stream.

In particular, the method for detecting a separation gas in a fluid flow stream comprises: (a) generating, with a scatter detector, a scatter voltage output signal indicative of an intensity of scattered light as a flow stream comprising a plurality of samples, each sample separated by a separation gas, passes through a flow cytometer for a period of time, (b) sampling the scatter voltage output signal, and (c) recording a timestamp and a voltage value for each sampled voltage of the scatter voltage output signal that is greater than a separation gap threshold. In one example, each of the plurality of samples is suspected of containing particles of interest. The method may also include comparing each sampled voltage of the scatter voltage output signal to the separation gap threshold.

In operation, the processor samples the voltage output signal of the scatter detector, and records voltage values that are greater than a separation gap threshold. In some examples, each sampled voltage of the voltage output signal is compared to the separation gap threshold. The separation gap threshold has, in some examples, a value at least two times greater than a maximum voltage output of the plurality samples, which can depend on the type of flow cytometer and the electronics of the forward scatter detector. In connection with the experimental data presented below, the maximum voltage capable of detection by the forward scatter detector is 5V and a separation gap threshold of 3.9V was selected (corresponding to (800/1023) * 5V). This threshold is more than double the maximum expected sample output of 1.6V from the forward scatter detector. Further, the voltage output signal is sampled at a frequency. In some examples, the sampling frequency is between 5kHz and 500kHz. In a further example, the sampling frequency of up to about 10MHz is used.

The analysis software algorithm, executed by the processor, can consist of two portions, an initial time correlation and an air bubble gap event timing, to delineate individual microplate wells from the continuous flow cytometer data stream. The bubble-gap event timing algorithm may be used in conjunction with other well identification parameters, such as those described above.

As scatter data is collected, a timestamp is recorded at the time that each sampled voltage that is over the threshold occurred. Therefore, the flow cytometry system, or the processor integrated therein or in communication therewith, may also include a clock. This timestamp will be used to correlate detected patterns with the data stream from the flow cytometer. The flow cytometry system may also include, or be in communication with a memory in which the sampled voltage values above the threshold and the timestamps are recorded.

In addition, at the start of a microplate sampling run, before the first microplate well is sampled, a starting time calibration sequence may be performed. In such an example, the method may also include prior to the generating step, moving the plurality of samples comprising particles into the flow stream, inserting the separation gas between adjacent ones of said plurality of samples to separate said samples from each other in said flow stream, said flow stream thereby constituting a gas-separated sample flow stream, guiding said fluid-separated sample flow stream including the separated samples and the separation fluid to and through the flow cytometer, and continuously operating the flow cytometer to focus the gas-separated flow stream and to detect scattered light by the scatter detector as the fluid flow stream passes through the flow cytometer. In such an example, the method may also include prior to the moving step, obtaining a plurality of samples from a plate having a plurality of sample wells, wherein each sample of the plurality of samples is obtained from a respective well of the plurality of wells.

In one particular example, three separation bubble gaps are introduced, each separated by a one second sip of deionized water, and followed by eight seconds of deionized water. When sample event data acquisition begins from the flow cytometer, the bubble-gap detector microprocessor is initiated with a time stamp of zero. With this calibration sequence, the timestamp output of the air bubble gap detector (separation gas timing data) can be correlated with the flow cytometer sample event data timing to synchronize the start of a plate sampling run. In operation, separation gas timing data generated from the captured scatter voltage signal and corresponding timestamp, which is applied when the output of the scatter detector is over the set voltage threshold. This separation gas timing data is synchronized with the sample events data from the flow cytometer based on timing. The separation gas timing data is plotted with the sample events versus time histogram that is used for well identification. Accordingly, the air bubble detection pattern timing output may be used to delineate between well air bubble gaps where microbubbles, debris, insufficient sample, sample preparation error or carryover would make it difficult to do so only using event counts over time.

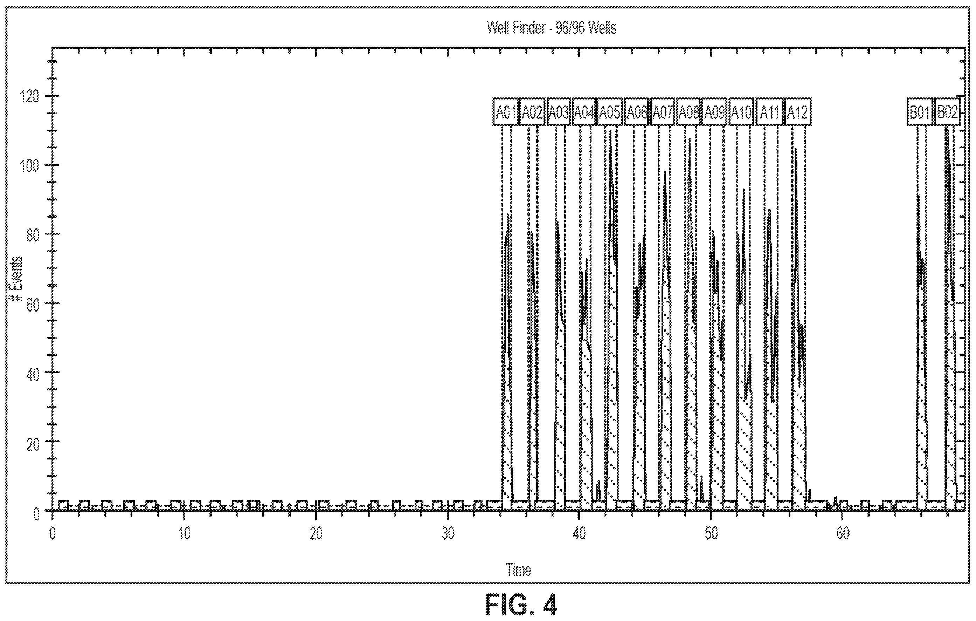

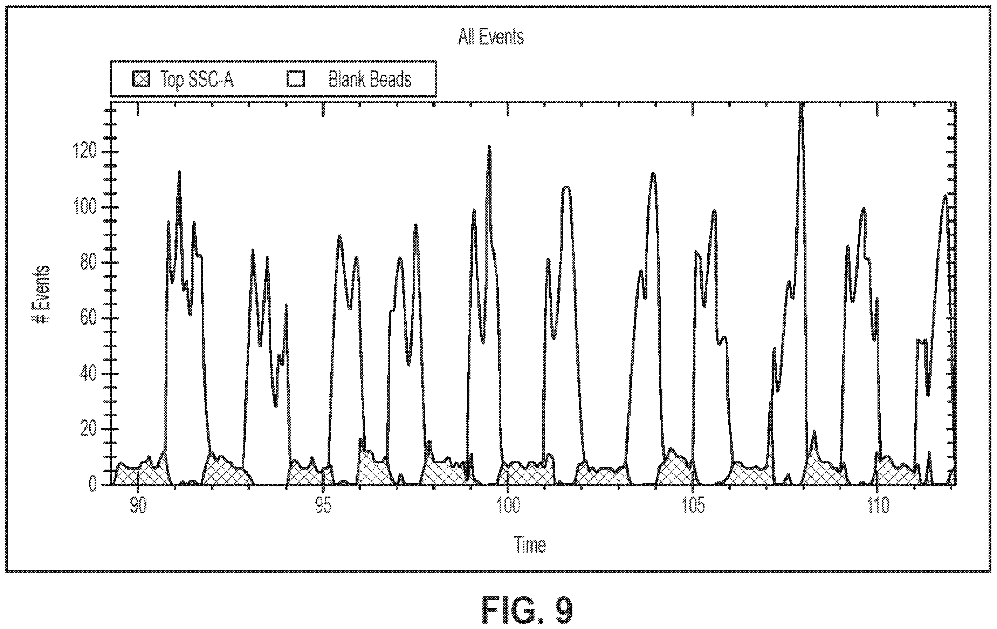

In one example, the scatter detector comprises a forward scatter detector, as described in addition detail below in relation to FIGs. 4-8. In another example, the scatter detector comprises a side scatter detector as described in additional detail below in relation to FIG. 9. In the embodiment where the scatter detector comprises a forward scatter detector, the method may also include generating, with a side scatter detector, a side scatter voltage output signal indicative of an intensity of side scattered light as the flow stream comprising the plurality of samples, each sample separated by a separation gas, passes through the flow cytometer for the period of time, generating, with a fluorescence detector, a fluorescence voltage output signal indicative of an intensity of fluorescent light emitted as the flow stream comprising the plurality of samples, each sample separated by a separation gas, passes through the flow cytometer for the period of time, and generating sample events data based, at least in part on the forward scatter voltage output signal, side scatter voltage output signal and fluorescence voltage output signal.

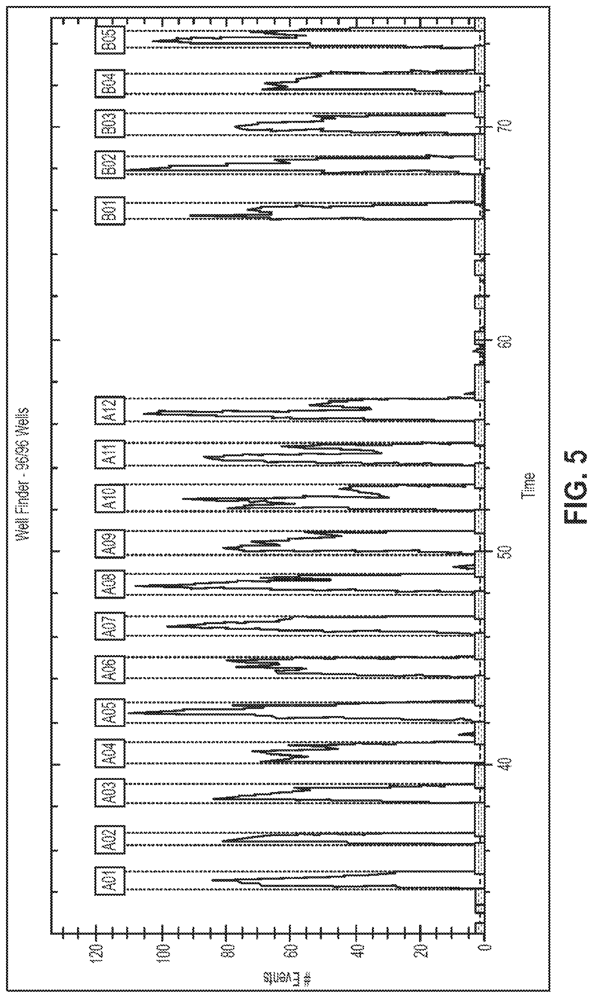

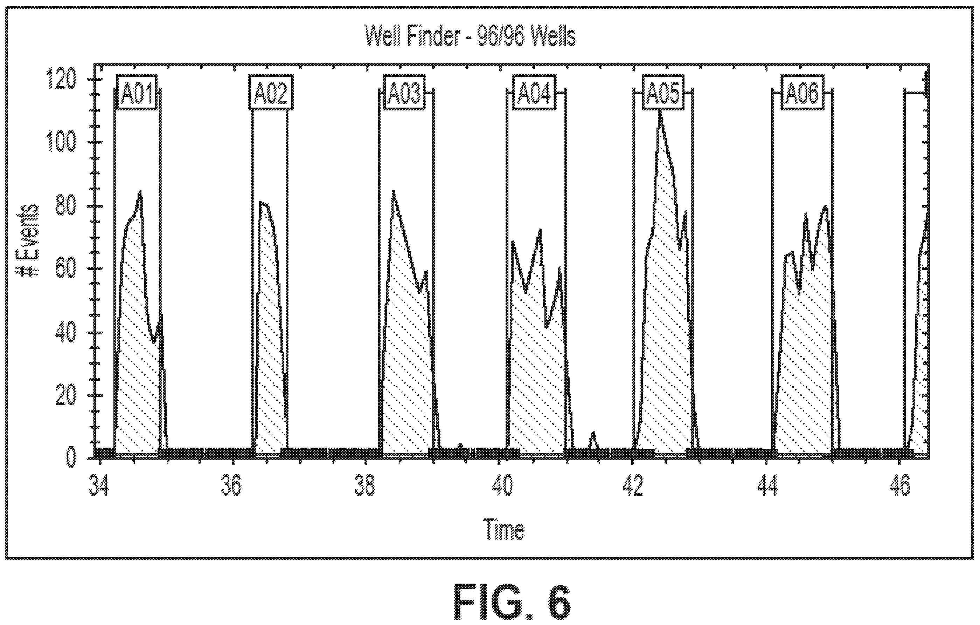

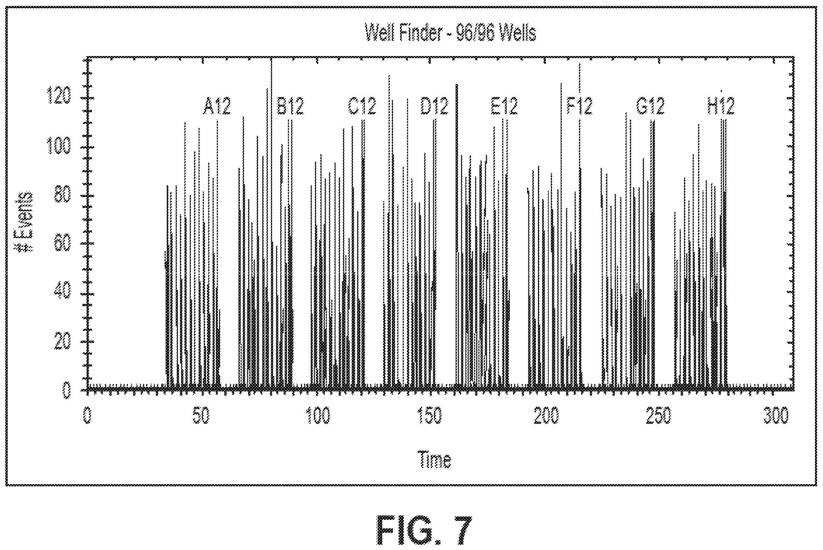

An exemplary air bubble detector of the present invention was tested experimentally by first measuring forward scatter flow cytometer waveforms of both air bubbles and samples and determining a method to distinguish the two types of waveforms. The resulting separation gas timing data is illustrated in FIGs. 4-7, plotted with the sample detection data histogram. The flow cytometer generates sample detection data based on the outputs of the forward scatter, side scatter and fluorescence detectors. The number of wells identified by the well identification algorithm and the total number of wells in a sample plate are shown at the top of the histogram. In these figures, the tall vertical lines on the time histogram correlate to bubbles going through the flow cell and the short vertical lines correlate to the number of events in a sample. The detection of separation bubbles can be seen particularly well in the pre-plate priming sequence shown in FIG. 4, which also illustrates the detector output from sampling of the first row A of the well plate, followed by shaking of the microplate to resuspend any particles in the samples, with inter-row shake, and the detector output from sampling of the first two wells of row B. FIG. 5 is a close-up view of a portion of FIG. 4, specifically, the detector output from sampling of the first row A of the well plate, followed by microplate shaking, and the detector output from sampling of the first two wells of row B. FIG. 6 is also is a close-up view of a portion of FIG. 4, specifically the detector output from sampling of the first six wells of row A of the well plate. FIG. 7 is a histogram of the detector output from a sampled full 96-well plate. Control software for operating a flow cytometry device may, in some cases, allow a user to program a custom sampling protocol, which may include, for example, a set of probe rinses and/or microplate shaking sequences to be performed after a certain number of wells are sampled. In the illustrated examples, a 96 well microplate was sampled row-by-row, with microplate shaking after each row.

The gates, each labelled with a letter and number, in each of FIGs. 4-7 correspond to the respective wells of the well plates identified by the method of the present disclosure. This novel method utilizing the forward scatter output to detect bubble gaps limit well identification errors, as compared to previous methods. The forward scatter waveform analysis described herein, used in conjunction with the sampling protocol, may allow for accurate identification and verification of sampling protocol features, such as row or column plate shaking and probe rinses, as well as the bubble gaps between samples, independent of detection of the samples themselves. In the forward scatter waveform analysis, sequences of detected bubbles are used to delineate the samples, rather than sequences of low event counts between samples. This may eliminate possible errors that can occur where there are sequences of low event counts in a sample due to, for example, sample preparation error, incorrectly dispensed samples, samples with very few particles of interest (e.g., toxicity assays), insufficient re-suspension of the sample, clogging of the fluidic sample tubing. In addition, forward scatter waveform analysis can provide real-time feedback on the consistency of bubble gaps in the flow cell which can be used to detect clogging of the fluidic pathway from sample probe to flow cell.

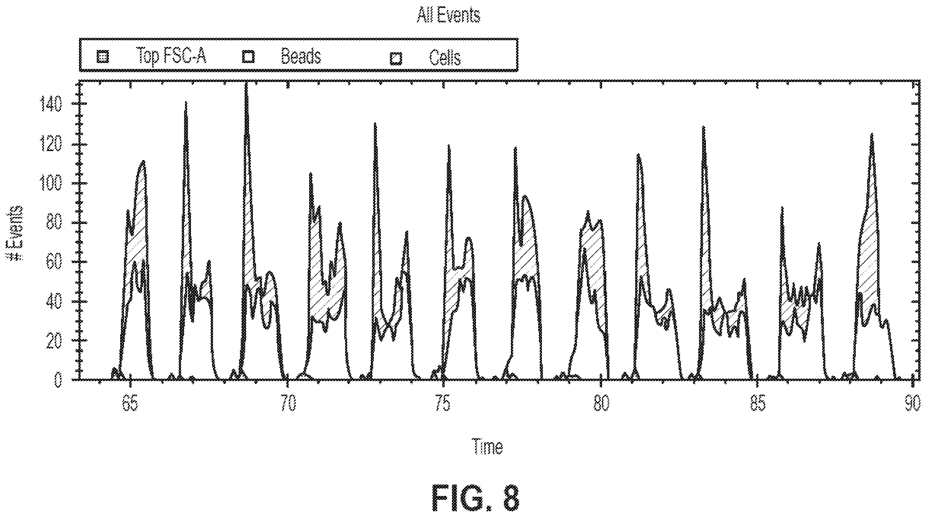

FIG. 8 illustrates an example histogram of sample event data of a processed FSC-A output acquired from the flow cytometer plotted with separation gas timing output data acquired from the forward scatter detector of the flow cytometer. As such, in the example shown in FIG. 8 the flow cytometer detector itself (not an external device) converts the voltage output from the forward scatter PMT to a processed FSC-A digital output value for each event. The boundary between the separation gas and the liquid sample will cause one or more events with a FSC-A value to be at the top limit of detection (e.g., top value produced by the flow cytometer), thereby forming gates around the top FSC-A event values as shown in FIG. 8. The flow cytometer also records a timestamp for every event recorded. With this information, the separation gas timing data is synchronized with the sample events data from the flow cytometer based on timing. The separation gas timing data is plotted with the sample events versus time histogram that is used for well identification. Accordingly, the air bubble detection pattern timing output may be used to delineate between well air bubble gaps where microbubbles, debris, insufficient sample, sample preparation error or carryover would make it difficult to do so only using event counts over time.

FIG. 9 illustrates an example histogram of sample event data of a processed SSC-A output acquired from the flow cytometer plotted with separation gas timing output data acquired from the side scatter detector of the flow cytometer. In the example shown in FIG. 9, the flow cytometer detector itself (not an external device) converts the voltage output from the side scatter PMT to a processed SSC-A digital output value for each event. The flow cytometer also records a timestamp for every event recorded. With this information, the separation gas timing data is synchronized with the sample events data from the flow cytometer based on timing. The separation gas timing data is plotted with the sample events versus time histogram that is used for well identification.

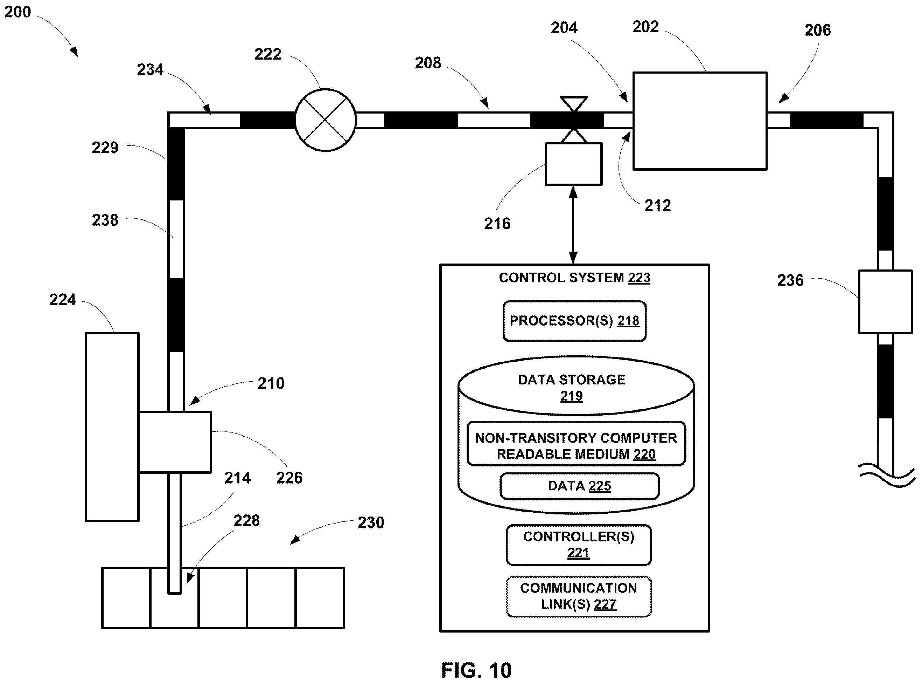

FIG. 10 illustrates another exemplary flow cytometer apparatus 200 for use in connection with the present invention. In particular, as shown in FIG. 10, the flow cytometer apparatus 200 includes a flow cell 202 having a first end 204 and a second end 206. The flow cytometer apparatus 200 also includes a fluidic pathway 208 having a first end 210 and a second end 212. As shown in FIG. 10, the second end 212 of the fluidic pathway 208 is coupled to the first end 204 of the flow cell 202. The flow cytometer apparatus 200 also includes a probe 214 coupled to the first end 210 of the fluidic pathway 208. As shown in FIG. 10, the flow cytometer apparatus 200 also includes at least one sensor 216 positioned between the probe 214 and the first end 204 of the flow cell 202. The sensor 216 is configured to detect one or more properties of a fluid in the fluidic pathway 208. Although a single sensor 216 is shown in FIG. 10, additional sensors may be positioned between the probe 214 and the first end 204 of the flow cell 202. Further, one or more additional sensors may be positioned downstream of the flow cell 202 as well.

An example probe 214 may include a 0.01 inch (0.254 mm) ID, 1/15 inch (1.693 mm) OD stainless steel needle compatible with HPLC ferrule fittings. In one embodiment, in order to reduce carryover of samples between wells, the probe 214 may have a conical tip. In another embodiment, silicone or other hydrophobic agent may coat the tip of the sampling probe 214 to help minimize sample carryover. In an alternative embodiment, the entire probe 214 may be made of a hydrophobic material to reduce carryover. Suitable hydrophobic materials for use in the coating or for making the entire hydrophobic probe include: Teflon(R) (poly(tetrafluoroethylene) (PTFE)), Kynar^{®} (polyvinylidene fluoride), Tefzel^{®} (ethylene-tetrafluoroethylene copolymer), tetrafluoroethylene-perfluoroalkyl vinyl ether copolymer resin (PFA), a tetrafluoroethylene-hexafluoropropylene copolymer (EFP), polyether ether ketone (PEEK), etc.

As shown in FIG. 10, the flow cytometer apparatus 200 may include processor(s) 218, data storage 219, and controller(s) 221, which together may be part of a control system 223. Processor(s) 218 may operate as one or more general-purpose hardware processors or special purpose hardware processors (e.g., digital signal processors, application specific integrated circuits, etc.). The processor(s) 218 may be configured to execute non-transitory computer readable medium 220, and manipulate data 225, both of which are stored in the data storage 219. The processor(s) 218 may also directly or indirectly interact with other components of the flow cytometer apparatus 200, such as the sensor 216 and/or communication links 227 as non-limiting examples.

The data storage 219 may be one or more types of hardware memory. For example, the data storage 219 may include or take the form of one or more computer-readable storage media that can be read or accessed by processor(s) 218. The one or more computer-readable storage media can include volatile and/or non-volatile storage components, such as optical, magnetic, organic, or another type of memory or storage, which can be integrated in whole or in part with processor(s) 218. In some implementations, the data storage 219 can be a single physical device. In other implementations, the data storage 219 can be implemented using two or more physical devices, which may communicate with one another via wired or wireless communication. As noted previously, the data storage 219 may include the non-transitory computer readable medium 220 and the data 225. The data 225 may be any type of data from the flow cytometer apparatus 200, such as configuration data, sensor data, and/or diagnostic data, among other possibilities.

The controller 221 may include one or more electrical circuits, units of digital logic, computer chips, and/or microprocessors that are configured to (perhaps among other tasks), interface between any combination of the various components of the flow cytometer apparatus 200. In some implementations, the controller 221 may be a purpose-built embedded device for performing specific operations with one or more subsystems of the flow cytometer apparatus 200.

The control system 223 may monitor and physically change the operating conditions of the flow cytometer apparatus 200. In doing so, the control system 223 may serve as a link between portions of the flow cytometer apparatus 200. In some instances, the control system 223 may serve as an interface between the flow cytometer apparatus 200 and another computing device. Further, the control system 223 may serve as an interface between the flow cytometer apparatus 200 and a user.

In some implementations, the control system 223 of the flow cytometer apparatus 200 may also include communication link(s) 227 configured to send and/or receive information. The communication link(s) 227 may transmit data indicating the state of the various components of the flow cytometer apparatus 200. For example, information read by the sensor 216 may be transmitted via the communication link(s) 227 to a separate device. Other diagnostic information indicating the integrity or health of various components of the flow cytometer apparatus 200 may be transmitted via the communication link(s) 227 to an external communication device.

In some implementations, the flow cytometer apparatus 200 may receive information at the communication link(s) 227 that is then processed by the processor(s) 218. The received information may indicate data that is accessible by the processor(s) 218 during execution of the instructions stored by the non-transitory computer readable medium 220. Further, the received information may change aspects of the controller(s) 221 that may affect the operating parameters of various components of the flow cytometer apparatus 200. In some cases, the received information may indicate a query requesting a particular piece of information (e.g., the operational state of one or more of the components of the flow cytometer apparatus 200). The processor(s) 218 may subsequently transmit the particular piece of information back out the communication link(s) 227.

In some cases, the communication link(s) 227 may include a wired connection. As such, the flow cytometer apparatus 200 may include one or more ports to interface the communication link(s) 227 to an external device. The communication link(s) 227 may include, in addition to or alternatively to the wired connection, a wireless connection. Some example wireless connections may utilize a cellular connection, such as CDMA, EVDO, GSM/GPRS, or 4G telecommunication, such as WiMAX or LTE. Alternatively or in addition, the wireless connection may utilize a Wi-Fi connection to transmit data to a wireless local area network (WLAN). In some implementations, the wireless connection may also communicate over an infrared link, Bluetooth, or a near-field communication (NFC) device.

During operation, the control system 223 may communicate with other systems of the flow cytometer apparatus 200 via wired or wireless connections, and may further be configured to communicate with one or more users of system. As one possible illustration, the control system 223 may receive an input (e.g., from the sensor 216 of the flow cytometer apparatus 200) indicating a change in operational status of the flow cytometer apparatus 200. The input to control system 223 may be received via the communication link(s) 227. Based on this input, the control system 223 may perform operations to cause the flow cytometer apparatus 200 to perform one or more tasks.

Operations of the control system 223 may be carried out by the processor(s) 218. Alternatively, these operations may be carried out by the controller 221, or a combination of the processor(s) 218 and the controller 221. In some implementations, the control system 223 may partially or wholly reside on a device other than the flow cytometer apparatus 200, and therefore may at least in part control the flow cytometer apparatus 200 remotely. Communication link(s) 227 may be used at least in part to carry out the remote communication.

As described above, the flow cytometer apparatus 200 includes a processor 218 in communication with the sensor 216, and a non-transitory computer readable medium 220 having stored therein instructions that are executable to cause the processor 218 to perform functions. In particular, the functions may include (i) receiving, via the processor 218, the one or more properties of the fluid in the fluidic pathway 208 detected by the sensor 216, and (ii) determining, based on the detected one or more properties of the fluid in the fluidic pathway 208, a presence of a separation gas in the fluid in the fluidic pathway 208.

The processor 218 may transmit the separation gas detection data to a processed data channel in combination with other detector data channels, such as the forward scatter detector 124, the fluorescence detector 126, and/or the side scatter detector 128 as non-limiting examples. As such, the separation gas presence data may be processed and integrated with sampling protocol information as part of the well identification algorithm. The processor 218 may be configured to correct for a known time offset between a flow cell event trigger and a sensor trigger. The time offset may be adaptive based on the sample flow rate. Further, this time offset accounts for the location of the sensor 216 being ahead of the other sensors in the data stream.

In one example, the sensor 216 is coupled directly to the fluidic pathway 208. In another example, the sensor 216 is positioned adjacent the fluidic pathway 208 while not physically touching the fluidic pathway 208. The sensor 216 can be positioned between about 0.10 inches (2.54 mm) and about 48 inches (1.219 m) from the first end 204 of the flow cell 202, between about 0.10 inches (2.54 mm) and about 24 inches (0.609 m) from the first end 204 of the flow cell 202, between about 0.10 inches (2.54 mm) and about 12 inches (0.305 m) from the first end 204 of the flow cell 202, between about 0.10 inches (2.54 mm) and about 6 inches (15.24 cm) from the first end 204 of the flow cell 202, between about 0.10 inches (2.54 mm) and about 4 inches (10.16 cm) from the first end 204 of the flow cell 202, or between about 0.10 inches (2.54 mm) and about 2 inches (5.08 cm) from the first end 204 of the flow cell 202. Positioning the sensor 216 closer to the flow cell 202 may provide improved accuracy with respect to separation gas detection in the fluidic pathway 208. As discussed above, although a single sensor 216 is shown in FIG. 10, one or more additional sensors may be positioned between the probe 214 and the first end 204 of the flow cell 202. Further, one or more additional sensor may be positioned downstream of the flow cell 202 as well.

As shown in FIG. 10, the flow cytometer apparatus 200 may further include a pump 222 in fluid communication with the fluidic pathway 208. Although the pump 222 is shown before the flow cell 202 in FIG. 10, in another embodiment the pump 222 may be positioned downstream of the flow cell 202. In one particular example, the pump 222 comprises a peristaltic pump. One example peristaltic pump is Gilson Minipuls 3, although other example peristaltic pumps may be used. In one embodiment, such a peristaltic pump may be operated in a manner that reduces pulsatile flow, thereby improving the sample characteristics in the flow cytometer apparatus 200. In another embodiment, the pump 222 comprises a syringe pump. Further, additional pumps may be added to the flow cytometer apparatus 200 to perform various functions. For example, a combination of one or more peristaltic pumps and one or more syringe pumps may be used to transport samples through the fluidic pathway 208.

In one embodiment, the fluidic pathway 208 may be made of an elastomer tubing, such as nitrile (NBR), Hypalon, Viton, silicone, polyvinyl chloride ("PVC"), EthylenePropylene-Diene-Monomer ("EPDM"), EPDM+polypropylene, polyurethane or natural rubber, among other possibilities. An example of such a tube may be a polyvinyl chloride (PVC) tube having an inner diameter of about 0.01 inches (0.254 mm) to 0.03 inches (0.762 mm) and a wall thickness of about 0.01 inches (0.254 mm) to 0.03 inches (0.762 mm). In one embodiment, a preferred tube for a fluidic pathway may be a PVC tube having an inner diameter of about 0.02 inches (0.508 mm) and a wall thickness of about 0.02 inches (0.508 mm).

In one embodiment, the flow cytometer apparatus 200 may include an autosampler 224 coupled to the probe 214. One particular non-limiting example of an autosampler 224 that may be used with the flow cytometer apparatus 200 is the Gilson 215 liquid manager. In one embodiment, the autosampler 224 may include an adjustable arm 226. As the adjustable arm 226 of the autosampler 224 moves side to side and up and down, the probe 214 is lowered into individual sample wells 228 of a well plate 230 to obtain a sample that has been tagged with a marker particle to be analyzed using the flow cytometer apparatus 100. In turn, the probe 214 is coupled to the first end 210 of the fluidic pathway 208, and a pump 222 is in fluid communication with the fluidic pathway 208.

In operation, the probe 214 may take up a sample 229 from a sample well 228 in the well plate 230, for example, and then advance the sample 229 into the fluidic pathway 208. The pump 222 may then drive a fluid flow stream 234 including samples 229 from the well 228 through the fluidic pathway 208 to the flow cell 202. In such an embodiment, the sensor 216 is in fluid communication with the autosampler 224 via the fluidic pathway 208, and the flow cytometer apparatus 200 is configured to focus the fluid flow stream 234 delivered by the fluidic pathway 208 from the autosampler 224 and selectively analyze the particles in each of the plurality of samples 229 as the fluid flow stream 234 passes through the sensor 216 and the flow cell 202. In one embodiment, the flow cytometer apparatus 200 further includes a laser interrogation device 236 positioned downstream from the flow cell 202. The laser interrogation device 236 is configured to examine individual samples flowing from the flow cell 202 at a laser interrogation point.

As shown in FIG. 10, the fluid flow stream 234 may include a series of samples 229 each separated by a separation gas 238, such as an air bubble as a non-limiting example. The separation gas 238 may be formed by allowing probe 214 to intake air (or other gas) in between intaking sample material from each of sample wells 228. As such, the autosampler 224 and the pump 222 cooperate to introduce aliquots of the separation gas 238 between successive ones of the samples 229 in the fluid flow stream 234 to configure the fluid flow stream 234 as a separation gas-separated fluid flow stream.

The sensor 216 may take a variety of forms. In one example, the sensor 216 comprises an ultrasonic sensor. In such an example, the one or more properties of the fluid in the fluidic pathway 208 detected by the sensor 216 comprises a density of the fluid. The non-transitory computer readable medium 220 may store first density data corresponding to a range of density values for a sample, and may further store second density data corresponding to a range of density values for air. The processor 218 may compare the density measured by the ultrasonic sensor with the stored first density data and second density data to determine whether or not a separation gas is present in the fluid in the fluidic pathway 208.

In another example, the sensor 216 comprises an optical sensor. In such an example, the one or more properties of the fluid in the fluidic pathway 208 detected by the sensor 216 comprises a reflection of light through the fluidic pathway 208. In particular, the optical sensor measures the transmission of light through the tubing of the fluidic pathway 208 and looks for differences in the reflection of air compared to the reflection of the samples. As such, the non-transitory computer readable medium 220 may store first reflection data corresponding to a range of reflection values for a sample, and may further store second reflection data corresponding to a range of reflection values for air. The processor 218 may compare the reflection measured by the optical sensor with the stored first reflection data and second reflection data to determine whether or not a separation gas is present in the fluid in the fluidic pathway 208.

In another example, the sensor 216 comprises an image sensor. In such an example, the one or more properties of the fluid in the fluidic pathway 208 detected by the sensor 216 comprises an image of the fluid in the fluidic pathway 208 captured by the image sensor. The image sensor may be a camera, such as a charge coupled device (CCD) or a complementary metal-oxide-semiconductor (CMOS) sensor. The image sensor uses camera and image processing to record samples and extract information from the fluid flow stream 234. In particular, the non-transitory computer readable medium 220 may store first image data corresponding to known images of samples, and may further store second image data corresponding to known images of a separation gas. The processor 218 may compare the image data from the image sensor with the stored first image data and second image data to determine whether or not a separation gas is present in the fluid in the fluidic pathway 208.

In yet another example, the sensor 216 comprises a mass flow sensor. In such an example, the one or more properties of the fluid in the fluidic pathway 208 detected by the sensor 216 comprises a temperature of the fluid in the fluidic pathway 208. In particular, one end of the mass flow sensor may be configured to heat the sample up, and the mass flow sensor determines how much the sample cools off by the time the sample reaches the other end of the mass flow sensor. Since samples will heat and cool at a different rate than air, the difference in temperature can indicate whether or not a separation gas is present in the fluidic pathway. In particular, the non-transitory computer readable medium 220 may store first temperature data corresponding to a known temperature drop range between opposite ends of the mass flow sensor for a sample when heated at one end of the mass flow sensor. The non-transitory computer readable medium 220 may further store second temperature data corresponding to a known temperature drop range between opposite ends of the mass flow sensor for a separation gas when the separation gas is heated at one end of the mass flow sensor. The processor 218 may compare the detected temperature drop from the mass flow sensor with the stored first temperature data and second temperature data to determine whether or not a separation gas is present in the fluid in the fluidic pathway 208.

In one embodiment, the non-transitory computer readable medium 220 causes the processor 218 to further perform functions including (i) generating separation gas timing data comprising the detected one or more properties of the fluid in the fluidic pathway 208 and a corresponding timestamp, and (ii) identifying a respective sample well of the plurality of sample wells 228, based, at least in part, on the separation gas timing data, as discussed in additional detail above.

In another embodiment, the non-transitory computer readable medium 220 causes the processor 218 to further perform functions including (i) generating, with a scatter detector, a scatter voltage output signal indicative of an intensity of scattered light as the fluid passes through the flow cytometer apparatus 200 for a period of time, and (ii) sampling the scatter voltage output signal, wherein determining the presence of the separation gas in the fluid in the fluidic pathway 208 is further based at least in part on the sampled scatter voltage output signal, as discussed in additional detail above.

In another embodiment, the non-transitory computer readable medium 220 causes the processor 218 to further perform functions including recording a timestamp and a voltage value for each sampled voltage of the scatter voltage output signal that is greater than a separation gap threshold, wherein the separation gap threshold has a constant value, as discussed in additional detail above.

In another embodiment, the non-transitory computer readable medium 220 causes the processor 218 to further perform functions including (i) determining, based on the detected one or more properties of the fluid in the fluidic pathway 208, a first timestamp of a start of a sample in the fluidic pathway 208, (ii) determining, based on the detected one or more properties of the fluid in the fluidic pathway, a second timestamp of an end of a sample in the fluidic pathway 208, and (iii) determining, based at least in part on the first timestamp, the second timestamp, a flow rate of the fluid in the fluidic pathway 208, and a diameter of the fluidic pathway, a volume of the sample.

In another embodiment, the non-transitory computer readable medium 220 causes the processor 218 to further perform functions including determining, based on the detected one or more properties of the fluid in the fluidic pathway 208, a presence of marker particles in the fluid in the fluidic pathway 208. In one example, the presence of marker particles in the fluid in the fluidic pathway 208 may be indicated by physical or chemical features, such as fluorescent intensity of the samples. The presence of marker particles in the fluid in the fluidic pathway 208 may be used to determine the boundary of the samples in the fluidic pathway 208. In addition, this marker particle data may provide for comparing the relative fluorescence of fluorescent marker particles to treated cells as a consistency parameter for samples obtained from wells within a plate or plates for a flowing stream of samples in an experiment recorded in a single data file. Thus, data obtained from multiple plates can be normalized to the marker particles, allowing direct comparison of results over large experimental data sets.

According to the claimed invention, the non-transitory computer readable medium 220 causes the processor 218 to further perform functions including (i) determining, based on the detected one or more properties of the fluid in the fluidic pathway 208 over a time period, a count of a number of detected separation gas bubbles in the fluid in the fluidic pathway 208, and if the count is below a minimum count tolerance, then determining that the flow cytometer apparatus 200 has a clog. In one embodiment, the count tolerance may be a minimum of fifteen detected separation gas bubbles per second. Other count tolerances are possible as well.

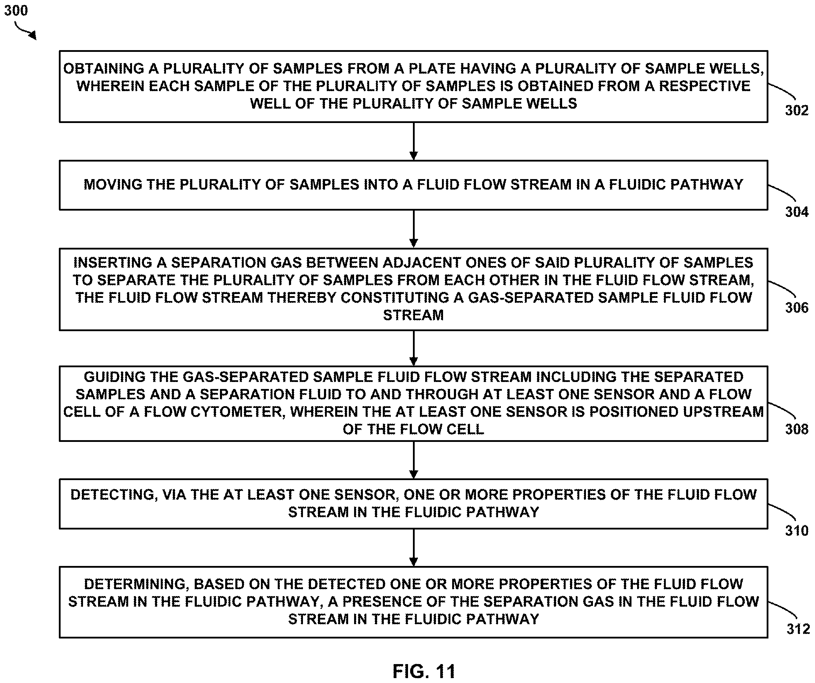

FIG. 11 is a flowchart of a method for detecting a separation gas in a fluid flow stream, according to example implementations. The implementations may be carried out by the flow cytometer apparatus 200 as described above in relation to FIG. 10. Method 300 may include one or more operations, functions, or actions as illustrated by one or more of blocks 302-312. Although the blocks are illustrated in a sequential order, these blocks may also be performed in parallel, and/or in a different order than those described herein. Also, the various blocks may be combined into fewer blocks, divided into additional blocks, and/or removed based upon the desired implementation.

In addition, for the method 300 and other procedures and operations disclosed herein, the block diagram illustrates a possible implementation. In this regard, each block may represent a module, a segment, or a portion of program code, which includes one or more instructions executable by a processor or computing device for implementing specific logical operations. The program code may be stored on any type of computer-readable medium, for example, such as a storage device including a disk or hard drive. The computer-readable medium may include non-transitory computer-readable medium, for example, such as computer-readable media that stores data for short periods of time like register memory, processor cache and Random Access Memory (RAM). The computer-readable medium may also include secondary or persistent long term storage, like read only memory (ROM), optical or magnetic disks, compact-disc read only memory (CD-ROM), for example. The computer-readable media may also be any other volatile or non-volatile storage systems. The computer-readable medium may be considered a computer-readable storage medium, for example, or a tangible storage device.

In addition, each block in FIG. 11 may represent circuitry that is wired to perform the specific logical operations.

At block 302, the method 300 includes obtaining a plurality of samples from a plate having a plurality of sample wells, wherein each sample of the plurality of samples is obtained from a respective well of the plurality of sample wells. At block 304, the method 300 includes moving the plurality of samples into a fluid flow stream in a fluidic pathway. At block 306, the method 300 includes inserting a separation gas between adjacent ones of said plurality of samples to separate the plurality of samples from each other in the fluid flow stream, the fluid flow stream thereby constituting a separation gas-separated sample fluid flow stream. At block 308, the method 300 guiding the gas-separated sample fluid flow stream including the separated samples and a separation fluid to and through at least one sensor and a flow cell of a flow cytometer, wherein the at least one sensor is positioned upstream of the flow cell. At block 310, the method 300 includes detecting, via the at least one sensor, one or more properties of the fluid flow stream in the fluidic pathway. At block 312, the method 300 includes determining, based on the detected one or more properties of the fluid flow stream in the fluidic pathway, a presence of the separation gas in the fluid flow stream in the fluidic pathway.

In one example, as discussed above in relation to FIG. 10 above, the plurality of samples are obtained from the plate having the plurality of sample wells via an autosampler coupled to a probe. Further, as discussed above in relation to FIG. 10 above, the at least one sensor 216 may comprise one or more of an ultrasonic sensor, an optical sensor, an image sensor, and a mass flow sensor.

In another example, the method 300 further includes (i) generating separation gas timing data comprising the detected one or more properties of the fluid flow stream in the fluidic pathway and a corresponding timestamp, and (ii) identifying a respective sample well of the plurality of sample wells, based, at least in part, on the separation gas timing data.

In yet another example, the method 300 further includes (i) generating, with a scatter detector, a scatter voltage output signal indicative of an intensity of scattered light as the fluid flow stream passes through the flow cytometer for a period of time, (ii) sampling the scatter voltage output signal, and (iii) recording a timestamp and a voltage value for each sampled voltage of the scatter voltage output signal that is greater than a separation gap threshold, wherein the separation gap threshold has a constant value.

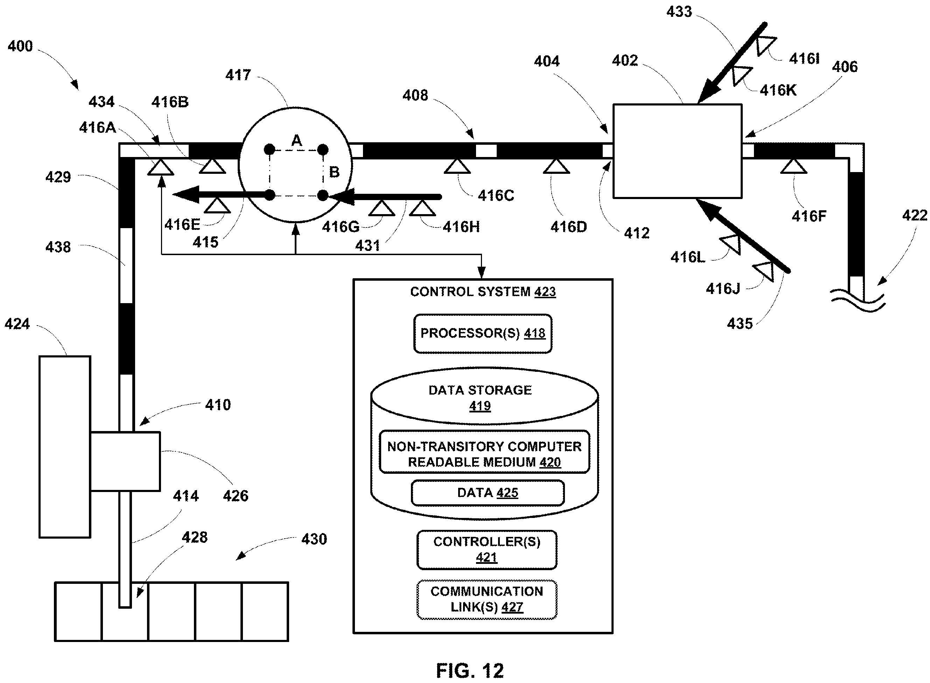

FIG. 12 illustrates another exemplary flow cytometer apparatus 400 for use in connection with the present invention. In particular, as shown in FIG. 12, the flow cytometer apparatus 400 includes a flow cell 402 having a first end 404 and a second end 406. The flow cytometer apparatus 400 also includes a fluidic pathway 408 having a first end 410 and a second end 412. As shown in FIG. 12, the second end 412 of the fluidic pathway 408 is coupled to the first end 404 of the flow cell 402. The flow cytometer apparatus 400 also includes a probe 414 coupled to the first end 410 of the fluidic pathway 408. The probe 414 may be similarly configured to the probe 214 described above in relation to FIG. 10. As shown in FIG. 12, the flow cytometer apparatus 400 also includes a sensor 416A positioned between the probe 414 and the first end 404 of the flow cell 402. The sensor 416A is configured to detect one or more properties of a fluid in the fluidic pathway 408. The sensor 416A can take a variety of forms, as discussed above in relation to FIG. 10.

As shown in FIG. 12, the flow cytometer apparatus 400 also includes a valve 417 positioned between the sensor 416A and the flow cell 402. The valve 417 is configured to move between a first position (shown as position A in FIG. 12) in which a fluid flow stream in the fluidic pathway 408 is directed to the first end 404 of the flow cell 402 and a second position (shown as position B in FIG. 12) in which the fluid flow stream in the fluidic pathway 408 is directed to a waste port 415. In one example, the valve 417 comprises a shear valve. In another example, the valve 417 comprises a rotary valve. Other valves are possible as well.

As shown in FIG. 12, the flow cytometer apparatus 400 also includes an auxiliary sheath fluidic pathway 431 in fluid communication with the valve 417, a first sheath port 433 in fluid communication with the flow cell 402, and a second sheath port 435 in fluid communication with the flow cell 402. Each of the auxiliary sheath fluidic pathway 431, the first sheath port 433, and the second sheath port 435 provide a sheath fluid to various components of the flow cytometer apparatus 400, as discussed in additional detail below.

As shown in FIG. 12, the flow cytometer apparatus 400 may include processor(s) 418, data storage 419, and controller(s) 421, which together may be part of a control system 423. Processor(s) 418 may operate as one or more general-purpose hardware processors or special purpose hardware processors (e.g., digital signal processors, application specific integrated circuits, etc.). The processor(s) 418 may be configured to execute non-transitory computer readable medium 420, and manipulate data 425, both of which are stored in the data storage 419. The processor(s) 418 may also directly or indirectly interact with other components of the flow cytometer apparatus 400, such as the sensor 416A, the valve 417, and/or communication links 427 as non-limiting examples.

The data storage 419 may be one or more types of hardware memory. For example, the data storage 419 may include or take the form of one or more computer-readable storage media that can be read or accessed by processor(s) 418. The one or more computer-readable storage media can include volatile and/or non-volatile storage components, such as optical, magnetic, organic, or another type of memory or storage, which can be integrated in whole or in part with processor(s) 418. In some implementations, the data storage 419 can be a single physical device. In other implementations, the data storage 419 can be implemented using two or more physical devices, which may communicate with one another via wired or wireless communication. As noted previously, the data storage 419 may include the non-transitory computer readable medium 420 and the data 425. The data 425 may be any type of data from the flow cytometer apparatus 400, such as configuration data, sensor data, and/or diagnostic data, among other possibilities.

The controller 421 may include one or more electrical circuits, units of digital logic, computer chips, and/or microprocessors that are configured to (perhaps among other tasks), interface between any combination of the various components of the flow cytometer apparatus 400. In some implementations, the controller 421 may be a purpose-built embedded device for performing specific operations with one or more subsystems of the flow cytometer apparatus 400.

The control system 423 may monitor and physically change the operating conditions of the flow cytometer apparatus 400. In doing so, the control system 423 may serve as a link between portions of the flow cytometer apparatus 400. In some instances, the control system 423 may serve as an interface between the flow cytometer apparatus 400 and another computing device. Further, the control system 423 may serve as an interface between the flow cytometer apparatus 400 and a user.

In some implementations, the control system 423 of the flow cytometer apparatus 400 may also include communication link(s) 427 configured to send and/or receive information. The communication link(s) 427 may transmit data indicating the state of the various components of the flow cytometer apparatus 400. For example, information read by the sensor 416A may be transmitted via the communication link(s) 427 to the valve 417, as a non-limiting example. Other diagnostic information indicating the integrity or health of various components of the flow cytometer apparatus 400 may be transmitted via the communication link(s) 427 to an external communication device.

In some implementations, the flow cytometer apparatus 400 may receive information at the communication link(s) 427 that is then processed by the processor(s) 418. The received information may indicate data that is accessible by the processor(s) 418 during execution of the instructions stored by the non-transitory computer readable medium 420. Further, the received information may change aspects of the controller(s) 421 that may affect the operating parameters of various components of the flow cytometer apparatus 400. In some cases, the received information may indicate a query requesting a particular piece of information (e.g., the operational state of one or more of the components of the flow cytometer apparatus 400). The processor(s) 418 may subsequently transmit the particular piece of information back out the communication link(s) 427.

In some cases, the communication link(s) 427 may include a wired connection. As such, the flow cytometer apparatus 400 may include one or more ports to interface the communication link(s) 427 to an external device. The communication link(s) 427 may include, in addition to or alternatively to the wired connection, a wireless connection. Some example wireless connections may utilize a cellular connection, such as CDMA, EVDO, GSM/GPRS, or 4G telecommunication, such as WiMAX or LTE. Alternatively or in addition, the wireless connection may utilize a Wi-Fi connection to transmit data to a wireless local area network (WLAN). In some implementations, the wireless connection may also communicate over an infrared link, Bluetooth, or a near-field communication (NFC) device.

During operation, the control system 423 may communicate with other systems of the flow cytometer apparatus 400 via wired or wireless connections, and may further be configured to communicate with one or more users of the system. As one possible illustration, the control system 423 may receive an input (e.g., from the sensor 416A of the flow cytometer apparatus 400) indicating one or more properties of the fluid in the fluidic pathway 408. The input to control system 423 may be received via the communication link(s) 427. Based on this input, the control system 423 may perform operations to cause the flow cytometer apparatus 400 to perform one or more tasks.

Operations of the control system 423 may be carried out by the processor(s) 418. Alternatively, these operations may be carried out by the controller 421, or a combination of the processor(s) 418 and the controller 421. In some implementations, the control system 423 may partially or wholly reside on a device other than the flow cytometer apparatus 400, and therefore may at least in part control the flow cytometer apparatus 400 remotely. Communication link(s) 427 may be used at least in part to carry out the remote communication.

As described above, the flow cytometer apparatus 400 includes a processor 418 in communication with the sensor 416A and the valve 417, and a non-transitory computer readable medium 420 having stored therein instructions that are executable to cause the processor 418 to perform functions. In particular, the functions may include (i) receiving, via the processor 418, the one or more properties of the fluid in the fluidic pathway 408 detected by the sensor 416A, and (ii) adjusting, based on the detected one or more properties of the fluid in the fluidic pathway 408, the valve 417 from the first position A to the second position B. Although FIG. 12 only shows the sensor 416A in communication with the control system 423, each of the sensors 416A-416L may be in communication with the control system 423 in the manner described with respect to sensor 416A.

In one embodiment, the flow cytometer apparatus 400 may include an autosampler 424 coupled to the probe 414. One particular non-limiting example of an autosampler 424 that may be used with the flow cytometer apparatus 400 is the Gilson 215 liquid manager. In one embodiment, the autosampler 424 may include an adjustable arm 426. As the adjustable arm 426 of the autosampler 424 moves side to side and up and down, the probe 414 is lowered into individual sample wells 428 of a well plate 430 to obtain a sample that has been tagged with a marker particle to be analyzed using the flow cytometer apparatus 400. In turn, the probe 414 is coupled to the first end 410 of the fluidic pathway 408.

In operation, the probe 414 may take up a sample 429 from a sample well 428 in the well plate 430, for example, and then advance the sample 429 into the fluidic pathway 408. Vacuum pressure at the waste outlet 422 downstream from the flow cell 402 may then pull a fluid flow stream 434 including samples 429 from the well 428 through the fluidic pathway 408 to the flow cell 402. In such an embodiment, the sensor 416A is in fluid communication with the autosampler 424 via the fluidic pathway 408, and the flow cytometer apparatus 400 is configured to focus the fluid flow stream 434 delivered by the fluidic pathway 408 from the autosampler 424 and selectively analyze the particles in each of the plurality of samples 429 as the fluid flow stream 434 passes through the sensor 416A and the flow cell 402.

As shown in FIG. 12, the fluid flow stream 434 may include a series of samples 429 each separated by a separation gas 438, such as an air bubble as a non-limiting example. The separation gas 438 may be formed by allowing probe 414 to intake air (or other gas) in between intaking sample material from each of sample wells 428. As such, the autosampler 424 and the vacuum pressure at the waste outlet 422 cooperate to introduce aliquots of the separation gas 438 between successive ones of the samples 429 in the fluid flow stream 434 to configure the fluid flow stream 434 as a separation gas-separated fluid flow stream. The separation gas-separated fluid flow stream proceeds to the flow cell 402 for sample measurement. As shown in FIG. 12, the flow cytometer apparatus 400 can include a first sheath port 433 and a second sheath port 435 in fluid communication with the flow cell 402. The first sheath port 433 and the second sheath port 435 provide a sheath fluid to the samples 429 to envelop the samples 429 with the sheath fluid.

The presence of the separation gas 438 between samples 429 helps to reduce carryover between samples, to thereby allow the system to keep track of sample identification (e.g., which sample well 428 the samples 429 come from) and to permit more rapid sampling. However, it may be advantageous to reduce the size of the separation gas 438 between samples 429. Such a reduction in the size of the separation gas 438 may provide a number of advantages. As an initial matter, it may improve the flow cytometer apparatus 400 information about well identification (e.g., knowing which sample well 428 the samples 429 came from as the samples 429 are undergoing measurement in the flow cell 402). Further, reducing the size of the separation gas 438 between samples 429 may improve the aspirated sampling consistency. In particular, as air passes through the flow cell 402 the fluid in the sample line moves more quickly and affects the aspirated sample volume. Thus, reducing the amount of air present in the flow cell 402 may reduce these potential issues. Further still, reducing the size of the separation gas 438 between samples 429 may improve the stability of the core stream passing through the flow cell 402. As air passes out of the injection needle in the flow cell 402 there is a pressure transient which dynamically varies the size of the core stream and the measurements made on that stream.

As discussed above, the valve 417 is configured to move between a first position (shown as position A in FIG. 12) in which a fluid flow stream in the fluidic pathway 408 is directed to the first end 404 of the flow cell 402 and a second position (shown as position B in FIG. 12) in which the fluid flow stream in the fluidic pathway 408 is directed to a waste port 415. When the valve 417 is in the second position, at least some of the separation gas 438 in the gas-separated sample fluid flow stream 434 is replaced with a sheath fluid from the auxiliary sheath fluidic pathway 431 to thereby reduce a size of a gap between adjacent samples 429 in the gas-separated sample fluid flow stream 434.

As discussed above, the flow cytometer apparatus 400 includes a sensor 416A positioned between the probe 414 and the first end 404 of the flow cell 402 that is configured to detect one or more properties of a fluid in the fluidic pathway 408. In one example, the sensor 416A comprises a first sensor positioned between the probe 414 and the valve 417, the flow cytometer apparatus 400 further includes a second sensor 416B positioned between the first sensor 416A and the valve 417. The first sensor 416A and the second sensor 416B may be used to detect the separation gas' 438 position and velocity, and may be used to control the timing of the valve 417 for replacement of a portion of the separation gas 438 with sheath fluid from the auxiliary sheath fluidic pathway 431.

As shown in FIG. 12, the flow cytometer apparatus 400 can also include a third sensor 416C positioned between the valve 417 and the first end 404 of the flow cell 402. The third sensor 416C may be used to detect separation gas 438 in the sample fluid flow stream 434 downstream of the valve 417 to use as feedback for the process of replacing a portion of the air gap with sheath fluid via the shear valve, as discussed in additional detail below. This process of replacing a portion of the air gap with sheath fluid via the shear valve may be referred to herein as the air gap replacement algorithm. Further, the third sensor 416C provides an updated position of the sample to the flow cytometer apparatus 400 system.

As shown in FIG. 12, the flow cytometer apparatus 400 can also include a fourth sensor 416D positioned between the third sensor 416C and the first end 404 of the flow cell 402, and a fifth sensor 416E positioned in fluid communication with the waste port 415. In such a configuration, the fourth sensor 416D acts in tandem with the third sensor 416C to detect the residual separation gas and is used as feedback for the air gap replacement algorithm. Further, the fourth sensor 416D helps to provide better certainty about the velocity of the sample 429 for the purpose of maintaining accurate well identification. The fifth sensor 416E adds a measurement of sample volume which did not go to the flow cell 402 for the purpose of minimizing wasted sample volume.

As shown in FIG. 12, the flow cytometer apparatus 400 can also include a sixth sensor 416F positioned downstream of the flow cell 402. The sixth sensor 416F can add the capability of tracking samples that have passed through the flow cell 402 as a verification to help keep track of well identification after the addition of sheath fluid from the first sheath port 433 and the second sheath port 435.

As shown in FIG. 12, the flow cytometer apparatus 400 can also include a seventh sensor 416G positioned in fluid communication with the auxiliary sheath fluidic pathway 431, and an eighth sensor 416H also positioned in fluid communication with the auxiliary sheath fluidic pathway 431. Such an arrangement can add the capability of monitoring the volume and velocity of unwanted, additional separation gas gaps coming from the sheath fluid, which might be mistaken for intentional separation gas 438, to thereby improve well identification.

As shown in FIG. 12, the flow cytometer apparatus 400 can also include a ninth sensor 416I in fluid communication with the first sheath port 433, and a tenth sensor 416J in fluid communication with the second sheath port 435. Such an arrangement can add the capability of monitoring air bubbles entering the flow cell 402 which may disrupt the sample measurements in the flow cell 402. In addition, the ninth sensor 416I and the tenth sensor 416J can provide information about unwanted air gaps to improve well identification.

As shown in FIG. 12, the flow cytometer apparatus 400 can also include an eleventh sensor 416K in fluid communication with the first sheath port 433 and positioned between the ninth sensor 416I and the flow cell 402, and a twelfth sensor 416L in fluid communication with the second sheath port 435 and positioned between the tenth sensor 416J and the flow cell 402. Such an arrangement improves the measurement of the ninth sensor 416I and the tenth sensor 416J by adding velocity information about the possible unwanted air gaps.

In various embodiments, any combination of the sensors 416A-416L may be used in the flow cytometer apparatus 400. For example, the flow cytometer apparatus 400 includes only the first sensor 416A. In another example, the flow cytometer apparatus 400 includes only the first sensor 416A and the third sensor 416C. In another example, the flow cytometer apparatus 400 includes only the first sensor 416A, the second sensor 416B, and the third sensor 416C. These are non-limiting examples, and any number and combination of the sensors 416A-416L may be used in the flow cytometer apparatus 400 described herein.

It may be preferred to control the size of aspirated air gaps and sample volumes by using the timing of the valve 417 to limit the pull pressure (e.g., negative pressure or vacuum) applied to the fluidic pathway 408 at the probe 414. Such a technique may use the first sensor 416A, the second sensor 416B, the third sensor 416C, and the fourth sensor 416D to control the timing as described above but without the air gap replacement algorithm described above. In such an embodiment, the auxiliary sheath fluidic pathway 431 is used to maintain sample line flow which minimizes pressure transients in the flow cell 402. Maintaining sample line flow means the vacuum is pulling auxiliary sheath fluid instead of air or sample so that the flow is not disrupted. In further embodiments, it may be preferred to degas the sheath fluid to prevent the generation of air bubbles in the fluid flow stream 434 leading to the flow cell 402.

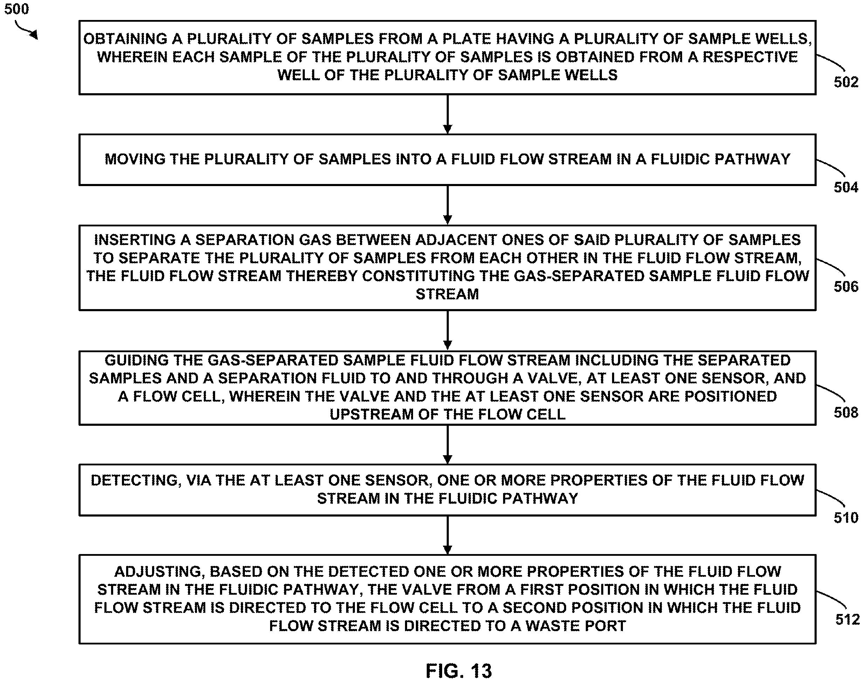

FIG. 13 is a flowchart of a method for forming a gas-separated sample fluid flow stream, according to example implementations. The implementations may be carried out by the flow cytometer apparatus 400 as described above in relation to FIG. 12. Method 500 may include one or more operations, functions, or actions as illustrated by one or more of blocks 502-512. Although the blocks are illustrated in a sequential order, these blocks may also be performed in parallel, and/or in a different order than those described herein. Also, the various blocks may be combined into fewer blocks, divided into additional blocks, and/or removed based upon the desired implementation.

In addition, for the method 500 and other procedures and operations disclosed herein, the block diagram illustrates a possible implementation. In this regard, each block may represent a module, a segment, or a portion of program code, which includes one or more instructions executable by a processor or computing device for implementing specific logical operations. The program code may be stored on any type of computer-readable medium, for example, such as a storage device including a disk or hard drive. The computer-readable medium may include non-transitory computer-readable medium, for example, such as computer-readable media that stores data for short periods of time like register memory, processor cache and Random Access Memory (RAM). The computer-readable medium may also include secondary or persistent long term storage, like read only memory (ROM), optical or magnetic disks, compact-disc read only memory (CD-ROM), for example. The computer-readable media may also be any other volatile or non-volatile storage systems. The computer-readable medium may be considered a computer-readable storage medium, for example, or a tangible storage device.

In addition, each block in FIG. 13 may represent circuitry that is wired to perform the specific logical operations.

At block 502, the method 500 includes obtaining a plurality of samples from a plate having a plurality of sample wells, wherein each sample of the plurality of samples is obtained from a respective well of the plurality of sample wells. At block 504, the method 500 includes moving the plurality of samples into a fluid flow stream in a fluidic pathway. At block 506, the method 500 includes inserting a separation gas between adjacent ones of said plurality of samples to separate the plurality of samples from each other in the fluid flow stream, the fluid flow stream thereby constituting the separation gas-separated sample fluid flow stream. At block 508, the method 500 guiding the gas-separated sample fluid flow stream including the separated samples and a separation fluid to and through a valve, at least one sensor, and a flow cell, wherein the valve and the at least one sensor are positioned upstream of the flow cell. At block 510, the method 500 includes detecting, via the at least one sensor, one or more properties of the fluid flow stream in the fluidic pathway. At block 512, the method 500 includes adjusting, based on the detected one or more properties of the fluid flow stream in the fluidic pathway, the valve from a first position in which the fluid flow stream is directed to the flow cell to a second position in which the fluid flow stream is directed to a waste port.

In one example, at least some of the separation gas in the gas-separated sample fluid flow stream is replaced with a fluid, such as a sheath fluid, when the valve is in the second position to thereby reduce a size of a gap between adjacent samples in the gas-separated sample fluid flow stream.

In one example, as discussed above in relation to FIG. 12 above, the plurality of samples are obtained from the plate having the plurality of sample wells via an autosampler coupled to a probe.

## Claims

1. A flow cytometer apparatus (200, 400), comprising:
a flow cell (202, 402) having a first end (204, 404) and a second end (206, 406);
a fluidic pathway (208, 408) having a first end (210, 410) and a second end (212, 412), wherein the second end (212, 412) of the fluidic pathway (208, 408) is coupled to the first end (204, 404) of the flow cell (202, 402);
a probe (214, 414) coupled to the first end (210, 410) of the fluidic pathway (208, 408);
at least one sensor (216, 416A-416L) positioned upstream of the flow cell (202, 402) between the probe (214, 414) and the first end (204, 404) of the flow cell (202, 402),
wherein the at least one sensor (216, 416A-416L) is configured to detect one or more properties of a fluid in the fluidic pathway (208, 408);
wherein the flow cytometer apparatus (200, 400) is configured to guide a gas-separated sample fluid flow stream (234, 434) including separated samples (229, 429) and the separation gas (238, 438) to and through the at least one sensor (216, 416A-416L) and the flow cell (202, 402);
a processor (218, 418) in communication with the at least one sensor (216, 416A-416L); and
a non-transitory computer readable medium (220, 420) having stored therein instructions that are executable to cause the processor (218, 418) to perform functions when using the flow cytometer apparatus (200, 400), including:
receiving, via the processor (218, 418), the one or more properties of the fluid in the fluidic pathway detected by the at least one sensor (216, 416A-416L); and
determining, based on the detected one or more properties of the fluid in the fluidic pathway (208, 408), a presence of a separation gas (238, 438) in the fluid in the fluidic pathway, and
determining, based on the detected one or more properties of the fluid in the fluidic pathway over a time period, a count of a number of detected separation gas bubbles in the fluid in the fluidic pathway; and
if the count is below a minimum count tolerance, then determining that the flow cytometer apparatus (200, 400) has a clog.

2. The flow cytometer apparatus (200, 400) of claim 1, wherein the at least one sensor is coupled to the fluidic pathway.

3. The flow cytometer apparatus (200, 400) of claim 1 or 2, wherein the at least one sensor (216, 416A-416L) is positioned between about 0.254 cm and about 121.92 cm from the first end (204, 404) of the flow cell (202, 402).

4. The flow cytometer apparatus (200, 400) of any one of claims 1-3, wherein
a) the at least one sensor (216, 416A-416L) comprises an ultrasonic sensor, and wherein the one or more properties of the fluid in the fluidic pathway (208, 408) detected by the at least one sensor comprises a density of the fluid, and/or wherein
b) the at least one sensor comprises an optical sensor, and wherein the one or more properties of the fluid in the fluidic pathway detected by the at least one sensor comprises a reflection of light through the fluidic pathway, and/or wherein
c) the at least one sensor comprises an image sensor, wherein the one or more properties of the fluid in the fluidic pathway detected by the at least one sensor comprises an image of the fluid in the fluidic pathway captured by the image sensor, and/or wherein
d) the flow cytometer apparatus (200, 400) further comprises a pump (222, 422) in fluid communication with the fluidic pathway.

5. The flow cytometer apparatus (200, 400) of any one of claims 1-4, wherein the at least one sensor (216, 416A-416L) comprises a mass flow sensor, wherein the one or more properties of the fluid in the fluidic pathway (208, 408) detected by the at least one sensor comprise a temperature of the fluid in the fluidic pathway.

6. The flow cytometer apparatus (200, 400) of any one of claims 1-5, further comprising:
an autosampler (224, 424) coupled to the probe (214, 414), wherein the autosampler is configured to insert a plurality of samples comprising particles from a plurality of respective sample wells into a fluid flow stream in the fluidic pathway (208, 408).

7. The flow cytometer apparatus (200, 400) of claim 6, wherein
a) the autosampler (224, 424) includes an adjustable arm (226, 426), and/or wherein
b) the at least one sensor (216, 416A-416L) is in fluid communication with the autosampler (224, 424) via the fluidic pathway (208, 408), and wherein the flow cytometer apparatus (200, 400) is configured to focus the fluid flow stream delivered by the fluidic pathway from the autosampler and selectively analyze the particles in each of the plurality of samples as the fluid flow stream passes through the at least one sensor and the flow cell (202, 402), and/or wherein
c) the autosampler and a pump (222, 422) cooperate to introduce aliquots of the separation gas between successive ones of the samples in the fluid flow stream to configure the fluid flow stream as a separation gas-separated fluid flow stream.

8. The flow cytometer apparatus (200, 400) of any one of claims 1-7,
a) the flow cytometer apparatus (200, 400) further comprising: a laser interrogation device (236) positioned downstream from the flow cell (202), wherein the laser interrogation device is configured to examine individual samples flowing from the flow cell (202, 402) at a laser interrogation point, and/or wherein
b) the non-transitory computer readable medium (220, 420) causes the processor (218, 418) to further perform functions including: generating separation gas timing data comprising the detected one or more properties of the fluid in the fluidic pathway and a corresponding timestamp; and
identifying a respective sample well of the plurality of sample wells, based, at least in part, on the separation gas timing data, and/or wherein the non-transitory computer readable medium (220, 420) causes the processor (218, 418) to further perform functions including:
generating, with a scatter detector, a scatter voltage output signal indicative of an intensity of scattered light as the fluid passes through the flow cytometer apparatus (200, 400) for a period of time; and
sampling the scatter voltage output signal, wherein determining the presence of the separation gas in the fluid in the fluidic pathway is further based at least in part on the sampled scatter voltage output signal, wherein, optionally, the non-transitory computer readable medium (220, 420) causes the processor (218, 418) to further perform functions including:
recording a timestamp and a voltage value for each sampled voltage of the scatter voltage output signal that is greater than a separation gap threshold, wherein the separation gap threshold has a constant value, and/or wherein
c) the non-transitory computer readable medium (220, 420) causes the processor (218, 418) to further perform functions including:
determining, based on the detected one or more properties of the fluid in the fluidic pathway, a first timestamp of a start of a sample in the fluidic pathway;
determining, based on the detected one or more properties of the fluid in the fluidic pathway, a second timestamp of an end of a sample in the fluidic pathway; and
determining, based at least in part on the first timestamp, the second timestamp, a flow rate of the fluid in the fluidic pathway, and a diameter of the fluidic pathway, a volume of the sample, and/or wherein
d) the non-transitory computer readable medium (220, 420) causes the processor (218, 418) to further perform functions including:
determining, based on the detected one or more properties of the fluid in the fluidic pathway, a presence of marker particles in the fluid in the fluidic pathway.

9. The flow cytometer apparatus (200, 400) of any one of claims 1-8, further comprising:
a valve (417) positioned between the probe and the first end (404) of the flow cell (402), wherein the valve is configured to move between a first position in which the fluid in the fluidic pathway is directed to the first end (404) of the flow cell (402) and a second position in which the separation gas in the fluid in the fluidic pathway is directed to a waste port (415) in fluid communication with the valve.

10. The flow cytometer apparatus (400) of claim 9,
a) wherein the valve (417) comprises a shear valve, and/or
b) wherein the flow cytometer apparatus (400) further comprises:
an auxiliary sheath fluidic pathway (431) in fluid communication with the valve (417), and/or
c) wherein the flow cytometer apparatus (400) further comprises:
one or more sheath ports (433, 435) in fluid communication with the flow cell (402), and/or
d) wherein the at least one sensor comprises a first sensor (416A) positioned between the probe (414) and the valve (417), the flow cytometer apparatus (400) further comprising one or more of a second sensor (416B) positioned between the first sensor and the valve, and/or
e) wherein the flow cytometer apparatus (400) further comprises:
a third sensor (416C) positioned between the valve (417) and the first end (404) of the flow cell (402), and/or
f) wherein the flow cytometer apparatus (400) further comprises one or more of:
a fourth sensor (416D) positioned between the third sensor and the first end (404) of the flow cell (402);
a fifth sensor (416E) positioned in fluid communication with the waste port;
a sixth sensor (416F) positioned downstream of the flow cell (402);
a seventh sensor (416G) positioned in fluid communication with an auxiliary sheath fluidic pathway in fluid communication with the valve;
an eighth sensor (416H) positioned in fluid communication with the auxiliary sheath fluidic pathway in fluid communication with the valve;
a ninth sensor (416I) in fluid communication with a first sheath port in fluid communication with the flow cell (402);
a tenth sensor (416J) in fluid communication with a second sheath port in fluid communication with the flow cell (402);
an eleventh sensor (416K) in fluid communication with the first sheath port and positioned between the ninth sensor and the flow cell (402); and
a twelfth sensor (416L)in fluid communication with the second sheath port and positioned between the tenth sensor and the flow cell (402).

11. A method for detecting a separation gas (238, 438) in a fluid flow stream, the method being implementable via the flow cytometer apparatus of any of claims 1 to 10, the method comprising:
obtaining a plurality of samples from a plate (230, 430) having a plurality of sample wells (228, 428), wherein each sample of the plurality of samples is obtained from a respective well of the plurality of sample wells;
moving the plurality of samples into a fluid flow stream in a fluidic pathway (208, 408);
inserting a separation gas (238, 438) between adjacent ones of said plurality of samples to separate the plurality of samples from each other in the fluid flow stream, the fluid flow stream thereby constituting a gas-separated sample fluid flow stream (234, 434);
guiding the gas-separated sample fluid flow stream including the separated samples and the separation gas to and through at least one sensor (216, 416A-416L) and a flow cell (202, 402) of a flow cytometer (200, 400), wherein the at least one sensor is positioned upstream of the flow cell (202, 402);
detecting, via the at least one sensor (216, 416A-416L), one or more properties of the fluid flow stream in the fluidic pathway; and
determining, based on the detected one or more properties of the fluid flow stream in the fluidic pathway, a presence of the separation gas in the fluid flow stream in the fluidic pathway.

12. The method of claim 11, wherein the plurality of samples are obtained from the plate (230, 430) having the plurality of sample wells via an autosampler (224, 424) coupled to a probe (214, 414).

13. The method of claim 11 or 12, further comprising:
generating separation gas timing data comprising the detected one or more properties of the fluid flow stream in the fluidic pathway and a corresponding timestamp; and
identifying a respective sample well of the plurality of sample wells, based, at least in part, on the separation gas timing data.

14. The method of any one of claims 11 to 13,
a) further comprising:
generating, with a scatter detector, a scatter voltage output signal indicative of an intensity of scattered light as the fluid flow stream passes through the flow cytometer for a period of time;
sampling the scatter voltage output signal; and
recording a timestamp and a voltage value for each sampled voltage of the scatter voltage output signal that is greater than a separation gap threshold, wherein the separation gap threshold has a constant value, and/or
b) wherein the at least one sensor (216, 416A-416L) comprises one or more of an ultrasonic sensor, an optical sensor, an image sensor, and a mass flow sensor.

15. The method of any one of claims 11 to 14, wherein:
moving the plurality of samples into a fluid flow stream in the fluidic pathway (208, 408), comprises moving the plurality of samples into a fluid flow stream in the fluidic pathway of the flow cytometer apparatus (200, 400) of any one of claims 1-10; and
wherein
guiding the gas-separated sample fluid flow stream including the separated samples and the separation gas to and through at least one sensor (216, 416A-416L) and the flow cell (202, 402) of a flow cytometer (200, 400), comprises guiding the gas-separated sample fluid flow stream including the separated samples and the separation gas to and through the at least one sensor and the flow cell (202, 402) of the flow cytometer apparatus (200, 400) of any one of claims 1-10.

## Patentansprüche

1. Durchflusszytometergerät (200, 400), umfassend:
eine Flusszelle (202, 402), die ein erstes Ende (204, 404) und ein zweites Ende (206, 406) aufweist;
einen fluidischen Pfad (208, 408), der ein erstes Ende (210, 410) und ein zweites Ende (212, 412) aufweist, wobei das zweite Ende (212, 412) des fluidischen Pfads (208, 408) mit dem ersten Ende (204, 404) der Flusszelle (202, 402) gekoppelt ist;
eine Sonde (214, 414), die mit dem ersten Ende (210, 410) des fluidischen Pfads (208, 408) gekoppelt ist;
mindestens einen Sensor (216, 416A-416L), der stromaufwärts von der Flusszelle (202, 402) zwischen der Sonde (214, 414) und dem ersten Ende (204, 404) der Flusszelle (202, 402) positioniert ist,
wobei der mindestens eine Sensor (216, 416A-416L) dazu konfiguriert ist, eine oder mehrere Eigenschaften eines Fluids in dem fluidischen Pfad (208, 408) zu detektieren;
wobei das Durchflusszytometergerät (200, 400) dazu konfiguriert ist, einen durch Gas getrennten Probenfluidfluss (234, 434), der getrennte Proben (229, 429) und das Trenngas (238, 438) umfasst, zu und durch den mindestens einen Sensor (216, 416A-416L) und die Flusszelle (202, 402) zu leiten;
einen Prozessor (218, 418), der mit dem mindestens einen Sensor (216, 416A-416L) in Verbindung steht; und
ein nicht vorübergehendes computerlesbares Medium (220, 420), auf dem Anweisungen gespeichert sind, die ausführbar sind, um zu bewirken, dass der Prozessor (218, 418) Funktionen erfüllt, wenn das Durchflusszytometergerät (200, 400) verwendet wird, umfassend:
Empfangen, über den Prozessor (218, 418), der einen oder der mehreren Eigenschaften des Fluids in dem fluidischen Pfad, das von dem mindestens einen Sensor (216, 416A-416L) detektiert wird; und
Bestimmen, basierend auf der einen oder den mehreren detektierten Eigenschaften des Fluids in dem fluidischen Pfad (208, 408), einer Präsenz eines Trenngases (238, 438) in dem Fluid in dem fluidischen Pfad, und
Bestimmen, basierend auf der einen oder den mehreren detektierten Eigenschaften des Fluids in dem fluidischen Pfad in einem Zeitraum, einer Zählung einer Anzahl von detektierten Trenngasblasen in dem Fluid in dem fluidischen Pfad; und
falls die Zählung unter einer minimalen Zählungstoleranz liegt, dann bestimmt wird, dass das Durchflusszytometergerät (200, 400) eine Verstopfung aufweist.

2. Durchflusszytometergerät (200, 400) nach Anspruch 1, wobei der mindestens eine Sensor mit dem fluidischen Pfad gekoppelt ist.

3. Durchflusszytometergerät (200, 400) nach Anspruch 1 oder 2, wobei der mindestens eine Sensor (216, 416A-416L) zwischen ungefähr 0,254 cm und ungefähr 121, 92 cm von dem ersten Ende (204, 404) der Flusszelle (202, 402) positioniert ist.

4. Durchflusszytometergerät (200, 400) nach einem der Ansprüche 1 bis 3, wobei
a) der mindestens eine Sensor (216, 416A-416L) einen Ultraschallsensor umfasst, und wobei die eine oder die mehreren Eigenschaften des Fluids in dem fluidischen Pfad (208, 408), das von dem mindestens einen Sensor detektiert wird, eine Dichte des Fluids umfassen, und/oder wobei
b) der mindestens eine Sensor einen optischen Sensor umfasst, und wobei die eine oder die mehreren Eigenschaften des Fluids in dem fluidischen Pfad, das durch den mindestens einen Sensor detektiert wird, eine Reflexion von Licht durch den fluidischen Pfad hindurch umfasst, und/oder wobei
c) der mindestens eine Sensor einen Bildsensor umfasst, wobei die eine oder die mehreren Eigenschaften des Fluids in dem fluidischen Pfad, das durch den mindestens einen Sensor detektiert wird, ein Bild des Fluids in dem fluidischen Pfad, das von dem Bildsensor aufgenommen wird, umfassen, und/oder wobei
d) das Durchflusszytometergerät (200, 400) ferner eine Pumpe (222, 422) in Fluidverbindung mit dem fluidischen Pfad umfasst.

5. Durchflusszytometergerät (200, 400) nach einem der Ansprüche 1 bis 4, wobei der mindestens eine Sensor (216, 416A-416L) einen Massendurchflusssensor umfasst, wobei die eine oder die mehreren Eigenschaften des Fluids in dem fluidischen Pfad (208, 408), das durch den mindestens einen Sensor detektiert wird, eine Temperatur des Fluids in dem fluidischen Pfad umfassen.

6. Durchflusszytometergerät (200, 400) nach einem der Ansprüche 1 bis 5, ferner umfassend:
einen Probengeber (224, 424), der mit der Sonde (214, 414) gekoppelt ist, wobei der Probengeber dazu konfiguriert ist, eine Vielzahl von Proben, die Partikel aus einer Vielzahl von jeweiligen Probenvertiefungen umfassen, in einen Fluidfluss in dem fluidischen Pfad (208, 408) einzufügen.

7. Durchflusszytometergerät (200, 400) nach Anspruch 6, wobei
a) der Probengeber (224, 424) einen verstellbaren Arm (226, 426) umfasst, und/oder wobei
b) der mindestens eine Sensor (216, 416A-416L) in Fluidverbindung mit dem Probengeber (224, 424) über den fluidischen Pfad (208, 408) steht, und wobei das Durchflusszytometergerät (200, 400) dazu konfiguriert ist, den Fluidfluss, der durch den fluidischen Pfad aus dem Probengeber geliefert wird, zu konzentrieren und die Partikel in jeder der Vielzahl von Proben selektiv zu analysieren, während der Fluidfluss durch den mindestens einen Sensor und die Flusszelle (202, 402) geht, und/oder wobei
c) der Probengeber und eine Pumpe (222, 422) zusammenwirken, um Aliquote des Trenngases zwischen aufeinanderfolgenden Proben in dem Fluidfluss einzuführen, um den Fluidfluss als einen durch Gas getrennten Trennungsfluidfluss zu konfigurieren.

8. Durchflusszytometergerät (200, 400) nach einem der Ansprüche 1 bis 7,
a) wobei das Durchflusszytometergerät (200, 400) ferner umfasst: eine Laserabfragevorrichtung (236), die stromabwärts von der Flusszelle (202) positioniert ist, wobei die Laserabfragevorrichtung dazu konfiguriert ist, einzelne Proben, die von der Flusszelle (202, 402) aus fließen, an einem Laserabfragepunkt zu untersuchen, und/oder wobei
b) das nicht vorübergehende computerlesbare Medium (220, 420) bewirkt, dass der Prozessor (218, 418) ferner Funktionen erfüllt, die umfassen: Generieren von Trenngaszeiteinstellungsdaten, welche die eine oder die mehreren detektierten Eigenschaften des Fluids in dem fluidischen Pfad und einen entsprechenden Zeitstempel umfassen; und
Identifizieren einer jeweiligen Probenvertiefung der Vielzahl von Probenvertiefungen, mindestens teilweise basierend auf den Trenngaszeiteinstellungsdaten, und/oder wobei das nicht vorübergehende computerlesbare Medium (220, 420) bewirkt, dass der Prozessor (218, 418) ferner Funktionen erfüllt, die umfassen:
Generieren, mit einem Streuungsdetektor, eines Streuungsspannungsausgabesignals, das eine Intensität von Streulicht angibt, während das Fluid durch das Durchflusszytometergerät (200, 400) während eines Zeitraums hindurch geht; und
Abtasten des Streuungsspannungsausgabesignals, wobei das Bestimmen der Präsenz des Trenngases in dem Fluid in dem fluidischen Pfad ferner mindestens teilweise auf dem abgetasteten Streuungsspannungsausgabesignal basiert, wobei wahlweise das nicht vorübergehende computerlesbare Medium (220, 420) bewirkt, dass der Prozessor (218, 418) ferner Funktionen erfüllt, die umfassen:
Aufzeichnen eines Zeitstempels und eines Spannungswertes für jede abgetastete Spannung des Streuungsspannungsausgabesignals, der größer als eine Trennspaltschwelle ist, wobei die Trennspaltschwelle einen konstanten Wert aufweist, und/oder wobei
c) das nicht vorübergehende computerlesbare Medium (220, 420) bewirkt, dass der Prozessor (218, 418) ferner Funktionen erfüllt, die umfassen:
Bestimmen, basierend auf der einen oder den mehreren detektierten Eigenschaften des Fluids in dem fluidischen Pfad, eines ersten Zeitstempels eines Beginns einer Probe in dem fluidischen Pfad;
Bestimmen, basierend auf der einen oder den mehreren detektierten Eigenschaften des Fluids in dem fluidischen Pfad, eines zweiten Zeitstempels eines Ende einer Probe in dem fluidischen Pfad; und
Bestimmen, mindestens teilweise basierend auf dem ersten Zeitstempel, dem zweiten Zeitstempel, einer Durchflussmenge des Fluids in dem fluidischen Pfad und einem Durchmesser des fluidischen Pfads, einem Volumen der Probe, und/oder wobei
d) das nicht vorübergehende computerlesbare Medium (220, 420) bewirkt, dass der Prozessor (218, 418) ferner Funktionen erfüllt, die umfassen:
Bestimmen, basierend auf der einen oder den mehreren detektierten Eigenschaften des Fluids in dem fluidischen Pfad, einer Präsenz von Markierungspartikeln in dem Fluid in dem fluidischen Pfad.

9. Durchflusszytometergerät (200, 400) nach einem der Ansprüche 1 bis 8, ferner umfassend:
ein Ventil (417), das zwischen der Sonde und dem ersten Ende (404) der Flusszelle (402) positioniert ist, wobei das Ventil dazu konfiguriert ist, sich zwischen einer ersten Position, in der das Fluid in dem fluidischen Pfad auf das erste Ende (404) der Flusszelle (402) gerichtet ist, und einer zweiten Position, in der das Trenngas in dem Fluid in dem fluidischen Pfad auf eine Ausscheidungsöffnung (415) in Fluidverbindung mit dem Ventil gerichtet ist, zu bewegen.

10. Durchflusszytometergerät (400) nach Anspruch 9,
a) wobei das Ventil (417) ein Abreißventil umfasst, und/oder
b) wobei das Durchflusszytometergerät (400) ferner umfasst:
einen fluidischen Pfad (431) einer Hilfsummantelung in Fluidverbindung mit dem Ventil (417), und/oder
c) wobei das Durchflusszytometergerät (400) ferner umfasst:
eine oder mehrere Ummantelungsöffnungen (433, 435) in Fluidverbindung mit der Flusszelle (402), und/oder
d) wobei der mindestens eine Sensor einen ersten Sensor (416A) umfasst, der zwischen der Sonde (414) und dem Ventil (417) positioniert ist, wobei das Durchflusszytometergerät (400) ferner einen oder mehrere von einem zweiten Sensor (416B) umfasst, die zwischen dem ersten Sensor und dem Ventil positioniert sind, und/oder
e) wobei das Durchflusszytometergerät (400) ferner umfasst:
einen dritten Sensor (416C), der zwischen dem Ventil (417) und dem ersten Ende (404) der Flusszelle (402) positioniert ist, und/oder
f) wobei das Durchflusszytometergerät (400) ferner einen oder mehrere umfasst von:
einem vierten Sensor (416D), der zwischen dem dritten Sensor und dem ersten Ende (404) der Flusszelle (402) positioniert ist;
einem fünften Sensor (416E), der in Fluidverbindung mit der Ausscheidungsöffnung positioniert ist;
einem sechsten Sensor (416F), der stromabwärts von der Flusszelle (402) positioniert ist;
einem siebten Sensor (416G), der in Fluidverbindung mit einem fluidischen Pfad einer Hilfsummantelung in Fluidverbindung mit dem Ventil positioniert ist;
einem achten Sensor (416H), der in Fluidverbindung mit dem fluidischen Pfad einer Hilfsummantelung in Fluidverbindung mit dem Ventil positioniert ist;
einem neunten Sensor (416I) in Fluidverbindung mit einer ersten Ummantelungsöffnung in Fluidverbindung mit der Flusszelle (402);
einem zehnten Sensor (416J) in Fluidverbindung mit einer zweiten Ummantelungsöffnung in Fluidverbindung mit der Flusszelle (402);
einem elften Sensor (416K) in Fluidverbindung mit der ersten Ummantelungsöffnung, und der zwischen dem neunten Sensor und der Flusszelle (402) positioniert ist; und
einem zwölften Sensor (416L) in Fluidverbindung mit der zweiten Ummantelungsöffnung, und der zwischen dem zehnten Sensor und der Flusszelle (402) positioniert ist.

11. Verfahren zum Detektieren eines Trenngases (238, 438) in einem Fluidfluss, wobei das Verfahren anhand des Durchflusszytometergeräts nach einem der Ansprüche 1 bis 10 umsetzbar ist, wobei das Verfahren umfasst:
Erzielen einer Vielzahl von Proben von einer Platte (230, 430), die eine Vielzahl von Probenvertiefungen (228, 428) aufweist, wobei jede Probe der Vielzahl von Proben aus einer jeweiligen Vertiefung der Vielzahl von Probenvertiefungen erzielt wird;
Bewegen der Vielzahl von Proben in einen Fluidfluss in einem fluidischen Pfad (208, 408);
Einfügen eines Trenngases (238, 438) zwischen angrenzenden der Vielzahl von Proben, um die Vielzahl von Proben in dem Fluidfluss voneinander zu trennen, wodurch der Fluidfluss einen durch Gas getrennten Probenfluidfluss (234, 434) bildet;
Leiten des durch Gas getrennten Probenfluidflusses, der die getrennten Proben und das Trenngas umfasst, zu und durch mindestens einen Sensor (216, 416A-416L) und eine Flusszelle (202, 402) eines Durchflusszytometers (200, 400), wobei der mindestens eine Sensor stromaufwärts von der Flusszelle (202, 402) positioniert ist;
Detektieren, anhand des mindestens einen Sensors (216, 416A-416L), einer oder mehrerer Eigenschaften des Fluidflusses in dem fluidischen Pfad; und
Bestimmen, basierend auf der einen oder den mehreren detektierten Eigenschaften des Fluidflusses in dem fluidischen Pfad, einer Präsenz des Trenngases in dem Fluidfluss in dem fluidischen Pfad.

12. Verfahren nach Anspruch 11, wobei die Vielzahl von Proben von der Platte (230, 430), welche die Vielzahl von Probenvertiefungen aufweist, anhand eines Probengebers (224, 424), der mit einer Sonde (214, 414) gekoppelt ist, erzielt wird.

13. Verfahren nach Anspruch 11 oder 12, ferner umfassend:
Generieren von Trenngaszeiteinstellungsdaten, welche die eine oder die mehreren detektierten Eigenschaften des Fluidflusses in dem fluidischen Pfad und einen entsprechenden Zeitstempel umfassen; und
Identifizieren einer jeweiligen Probenvertiefung der Vielzahl von Probenvertiefungen, mindestens teilweise basierend auf den Trenngaszeiteinstellungsdaten.

14. Verfahren nach einem der Ansprüche 11 bis 13,
a) ferner umfassend:
Generieren, mit einem Streuungsdetektor, eines Streuungsspannungsausgabesignals, das eine Intensität von Streulicht angibt, während der Fluidfluss während eines Zeitraums durch das Durchflusszytometer geht;
Abtasten des Streuungsspannungsausgabesignals; und
Aufzeichnen eines Zeitstempels und eines Spannungswertes für jede abgetastete Spannung des Streuungsspannungsausgabesignals, die größer ist als eine Trennspaltschwelle, wobei die Trennspaltschwelle einen konstanten Wert aufweist, und/oder
b) wobei der mindestens eine Sensor (216, 416A-416L) einen oder mehrere von einem Ultraschallsensor, einem optischen Sensor, einem Bildsensor und einem Massendurchflusssensor umfasst.

15. Verfahren nach einem der Ansprüche 11 bis 14, wobei:
das Bewegen der Vielzahl von Proben in einen Fluidfluss in dem fluidischen Pfad (208, 408) das Bewegen der Vielzahl von Proben in einen Fluidfluss in dem fluidischen Pfad des Durchflusszytometergeräts (200, 400) nach einem der Ansprüche 1 bis 10 umfasst; und wobei
das Leiten des durch Gas getrennten Probenfluidflusses, der die getrennten Proben und das Trenngas umfasst, zu und durch mindestens einen Sensor (216, 416A-416L) und die Flusszelle (202, 402) eines Durchflusszytometers (200, 400), das Leiten des durch Gas getrennten Probenfluidflusses, der die getrennten Proben und das Trenngas umfasst, zu und durch den mindestens einen Sensor und die Flusszelle (202, 402) des Durchflusszytometergeräts (200, 400) nach einem der Ansprüche 1 bis 10 umfasst.

## Revendications

1. Appareil de cytomètre en flux (200, 400), comprenant :
une cuve à circulation (202, 402) ayant une première extrémité (204, 404) et une deuxième extrémité (206, 406) ;
une voie fluidique (208, 408) ayant une première extrémité (210, 410) et une deuxième extrémité (212, 412), dans lequel la deuxième extrémité (212, 412) de la voie fluidique (208, 408) est couplée à la première extrémité (204, 404) de la cuve à circulation (202, 402) ;
une sonde (214, 414) couplée à la première extrémité (210, 410) de la voie fluidique (208, 408) ;
au moins un capteur (216, 416A-416L) positionné en amont de la cuve à circulation (202, 402) entre la sonde (214, 414) et la première extrémité (204, 404) de la cuve à circulation (202, 402),
dans lequel l'au moins un capteur (216, 416A-416L) est configuré pour détecter une ou plusieurs propriétés d'un fluide dans la voie fluidique (208, 408) ;
dans lequel l'appareil de cytomètre en flux (200, 400) est configuré pour guider un flux d'écoulement de fluide échantillon séparé par gaz (234, 434) comportant des échantillons séparés (229, 429) et le gaz de séparation (238, 438) vers et à travers l'au moins un capteur (216, 416A-416L) et la cuve à circulation (202, 402) ;
un processeur (218, 418) en communication avec l'au moins un capteur (216, 416A-416L) ; et
un support non transitoire lisible par ordinateur (220, 420) dans lequel sont stockées des instructions qui sont exécutables pour amener le processeur (218, 418) à effectuer des fonctions lors de l'utilisation de l'appareil de cytomètre en flux (200, 400), comportant les étapes suivantes :
via le processeur (218, 418), recevoir les une ou plusieurs propriétés du fluide dans la voie fluidique détectées par l'au moins un capteur (216, 416A-416L) ; et
sur la base des une ou plusieurs propriétés du fluide dans la voie fluidique (208, 408) détectées, déterminer la présence d'un gaz de séparation (238, 438) dans le fluide dans la voie fluidique, et
sur la base des une ou plusieurs propriétés du fluide dans la voie fluidique détectées sur une période de temps, déterminer un compte d'un nombre de bulles de gaz de séparation détectées dans le fluide dans la voie fluidique ; et
si le compte est en dessous d'une tolérance de compte minimale, alors déterminer que l'appareil de cytomètre en flux (200, 400) est obstrué.

2. Appareil de cytomètre en flux (200, 400) selon la revendication 1, dans lequel l'au moins un capteur est couplé à la voie fluidique.

3. Appareil de cytomètre en flux (200, 400) selon la revendication 1 ou 2, dans lequel l'au moins un capteur (216, 416A-416L) est positionné entre environ 0,254 cm et environ 121,92 cm de la première extrémité (204, 404) de la cuve à circulation (202, 402).

4. Appareil de cytomètre en flux (200, 400) selon l'une des revendications 1 à 3, dans lequel
a) l'au moins un capteur (216, 416A-416L) comprend un capteur à ultrasons, et dans lequel les une ou plusieurs propriétés du fluide dans la voie fluidique (208, 408) détectées par l'au moins un capteur comprennent une densité du fluide, et/ou dans lequel
b) l'au moins un capteur comprend un capteur optique, et dans lequel les une ou plusieurs propriétés du fluide dans la voie fluidique détectées par l'au moins un capteur comprennent une réflexion de la lumière à travers la voie fluidique, et/ou dans lequel
c) l'au moins un capteur comprend un capteur d'images, dans lequel les une ou plusieurs propriétés du fluide dans la voie fluidique détectées par l'au moins un capteur comprennent une image du fluide dans la voie fluidique capturée par le capteur d'images, et/ou dans lequel
d) l'appareil de cytomètre en flux (200, 400) comprend en outre une pompe (222, 422) en communication fluidique avec la voie fluidique.

5. Appareil de cytomètre en flux (200, 400) selon l'une des revendications 1 à 4, dans lequel l'au moins un capteur (216, 416A-416L) comprend un capteur de débit massique, dans lequel les une ou plusieurs propriétés du fluide dans la voie fluidique (208, 408) détectées par l'au moins un capteur comprennent une température du fluide dans la voie fluidique.

6. Appareil de cytomètre en flux (200, 400) selon l'une des revendications 1 à 5, comprenant en outre :
un échantillonneur automatique (224, 424) couplé à la sonde (214, 414), dans lequel l'échantillonneur automatique est configuré pour insérer une pluralité d'échantillons comprenant des particules provenant d'une pluralité de puits d'échantillons respectifs dans un flux d'écoulement de fluide dans la voie fluidique (208, 408).

7. Appareil de cytomètre en flux (200, 400) selon la revendication 6, dans lequel
a) l'échantillonneur automatique (224, 424) comporte un bras (226, 426) réglable, et/ou dans lequel
b) l'au moins un capteur (216, 416A-416L) est en communication fluidique avec l'échantillonneur automatique (224, 424) via la voie fluidique (208, 408), et dans lequel l'appareil de cytomètre en flux (200, 400) est configuré pour focaliser le flux d'écoulement de fluide délivré par la voie fluidique depuis l'échantillonneur automatique et analyser sélectivement les particules dans chacun de la pluralité d'échantillons lorsque le flux d'écoulement de fluide passe à travers l'au moins un capteur et la cuve à circulation (202, 402), et/ou dans lequel
c) l'échantillonneur automatique et une pompe (222, 422) coopèrent pour introduire des aliquotes du gaz de séparation entre des échantillons successifs parmi les échantillons dans le flux d'écoulement de fluide pour configurer le flux d'écoulement de fluide comme flux d'écoulement de fluide séparé par le gaz de séparation.

8. Appareil de cytomètre en flux (200, 400) selon l'une des revendications 1 à 7,
a) l'appareil de cytomètre en flux (200, 400) comprenant en outre : un dispositif d'interrogation laser (236) positionné en aval de la cuve à circulation (202), dans lequel le dispositif d'interrogation laser est configuré pour examiner des échantillons individuels s'écoulant depuis la cuve à circulation (202, 402) à un point d'interrogation laser, et/ou dans lequel
b) le support non transitoire lisible par ordinateur (220, 420) amène en outre le processeur (218, 418) à effectuer des fonctions comportant les étapes suivantes :
générer des données de temporisation de gaz de séparation comprenant les une ou plusieurs propriétés du fluide dans la voie fluidique détectées et un horodatage correspondant ; et
identifier un puits d'échantillon respectif de la pluralité de puits d'échantillons en se basant au moins en partie sur les données de temporisation de gaz de séparation, et/ou dans lequel le support non transitoire lisible par ordinateur (220, 420) amène en outre le processeur (218, 418) à effectuer des fonctions comportant les étapes suivantes :
à l'aide d'un détecteur de diffusion, générer un signal de sortie de tension de diffusion indiquant une intensité de la lumière diffusée lorsque le fluide passe à travers l'appareil de cytomètre en flux (200, 400) pendant une période de temps ; et
échantillonner le signal de sortie de tension de diffusion, dans lequel le fait de déterminer la présence du gaz de séparation dans le fluide dans la voie fluidique est en outre basé au moins en partie sur le signal de sortie de tension de diffusion échantillonné, dans lequel, facultativement, le support non transitoire lisible par ordinateur (220, 420) amène en outre le processeur (218, 418) à effectuer des fonctions comportant les étapes suivantes :
enregistrer un horodatage et une valeur de tension pour chaque tension échantillonnée du signal de sortie de tension de diffusion qui est supérieure à un seuil d'écart de séparation, dans lequel le seuil d'écart de séparation a une valeur constante, et/ou dans lequel
c) le support non transitoire lisible par ordinateur (220, 420) amène en outre le processeur (218, 418) à effectuer des fonctions comportant les étapes suivantes :
sur la base des une ou plusieurs propriétés du fluide dans la voie fluidique détectées, déterminer un premier horodatage d'un début d'un échantillon dans la voie fluidique ;
sur la base des une ou plusieurs propriétés du fluide dans la voie fluidique détectées, déterminer un deuxième horodatage d'une fin d'un échantillon dans la voie fluidique ; et
en se basant au moins en partie sur le premier horodatage, le deuxième horodatage, un débit du fluide dans la voie fluidique et un diamètre de la voie fluidique, déterminer un volume de l'échantillon, et/ou dans lequel
d) le support non transitoire lisible par ordinateur (220, 420) amène en outre le processeur (218, 418) à effectuer des fonctions comportant l'étape suivante :
sur la base des une ou plusieurs propriétés du fluide dans la voie fluidique détectées, déterminer la présence de particules de marqueur dans le fluide dans la voie fluidique.

9. Appareil de cytomètre en flux (200, 400) selon l'une des revendications 1 à 8, comprenant en outre :
une vanne (417) positionnée entre la sonde et la première extrémité (404) de la cuve à circulation (402), dans lequel la vanne est configurée pour faires des passages entre une première position dans laquelle le fluide dans la voie fluidique est dirigé vers la première extrémité (404) de la cuve à circulation (402) et une deuxième position dans laquelle le gaz de séparation dans le fluide dans la voie fluidique est dirigé vers un orifice d'évacuation (415) en communication fluidique avec la vanne.

10. Appareil de cytomètre en flux (400) selon la revendication 9,
a) dans lequel la vanne (417) comprend une vanne à cisaillement, et/ou
b) dans lequel l'appareil de cytomètre en flux (400) comprend en outre :
une voie fluidique à gaine auxiliaire (431) en communication fluidique avec la vanne (417), et/ou
c) dans lequel l'appareil de cytomètre en flux (400) comprend en outre :
un ou plusieurs orifices de gaine (433, 435) en communication fluidique avec la cuve à circulation (402), et/ou
d) dans lequel l'au moins un capteur comprend un premier capteur (416A) positionné entre la sonde (414) et la vanne (417), l'appareil de cytomètre en flux (400) comprenant en outre un ou plusieurs deuxièmes capteurs (416B) positionnés entre le premier capteur et la vanne, et/ou
e) dans lequel l'appareil de cytomètre en flux (400) comprend en outre :
un troisième capteur (416C) positionné entre la vanne (417) et la première extrémité (404) de la cuve à circulation (402), et/ou
f) dans lequel l'appareil de cytomètre en flux (400) comprend en outre un ou plusieurs parmi :
un quatrième capteur (416D) positionné entre le troisième capteur et la première extrémité (404) de la cuve à circulation (402) ;
un cinquième capteur (416E) positionné en communication fluidique avec l'orifice d'évacuation ;
un sixième capteur (416F) positionné en aval de la cuve à circulation (402) ;
un septième capteur (416G) positionné en communication fluidique avec une voie fluidique à gaine auxiliaire en communication fluidique avec la vanne ;
un huitième capteur (416H) positionné en communication fluidique avec la voie fluidique à gaine auxiliaire en communication fluidique avec la vanne ;
un neuvième capteur (416I) en communication fluidique avec un premier orifice de gaine en communication fluidique avec la cuve à circulation (402) ;
un dixième capteur (416J) en communication fluidique avec un deuxième orifice de gaine en communication fluidique avec la cuve à circulation (402) ;
un onzième capteur (416K) en communication fluidique avec le premier orifice de gaine et positionné entre le neuvième capteur et la cuve à circulation (402) ; et
un douzième capteur (416L) en communication fluidique avec le deuxième orifice de gaine et positionné entre le dixième capteur et la cuve à circulation (402).

11. Procédé pour détecter un gaz de séparation (238, 438) dans un flux d'écoulement de fluide, le procédé pouvant être mis en œuvre via l'appareil de cytomètre en flux selon l'une des revendications 1 à 10, le procédé comprenant les étapes suivantes :
obtenir une pluralité d'échantillons à partir d'une plaque (230, 430) ayant une pluralité de puits d'échantillons (228, 428), dans lequel chaque échantillon de la pluralité d'échantillons est obtenu à partir d'un puits respectif de la pluralité de puits d'échantillons ;
déplacer la pluralité d'échantillons dans un flux d'écoulement de fluide dans une voie fluidique (208, 408) ;
insérer un gaz de séparation (238, 438) entre des échantillons adjacents de ladite pluralité d'échantillons pour séparer la pluralité d'échantillons les uns des autres dans le flux d'écoulement de fluide, le flux d'écoulement de fluide constituant ainsi un flux d'écoulement de fluide échantillon séparé par gaz (234, 434) ;
guider le flux d'écoulement de fluide échantillon séparé par gaz comportant les échantillons séparés et le gaz de séparation vers et à travers au moins un capteur (216, 416A-416L) et une cuve à circulation (202, 402) d'un cytomètre en flux (200, 400), dans lequel l'au moins un capteur est positionné en amont de la cuve à circulation (202, 402) ;
via l'au moins un capteur (216, 416A-416L), détecter une ou plusieurs propriétés du flux d'écoulement de fluide dans la voie fluidique ; et
sur la base des une ou plusieurs propriétés du flux d'écoulement de fluide dans la voie fluidique détectées, déterminer la présence du gaz de séparation dans le flux d'écoulement de fluide dans la voie fluidique.

12. Procédé selon la revendication 11, dans lequel la pluralité d'échantillons est obtenue à partir de la plaque (230, 430) ayant la pluralité de puits d'échantillons via un échantillonneur automatique (224, 424) couplé à une sonde (214, 414).

13. Procédé selon la revendication 11 ou 12, comprenant en outre les étapes suivantes :
générer des données de temporisation de gaz de séparation comprenant les une ou plusieurs propriétés du flux d'écoulement de fluide dans la voie fluidique détectées et un horodatage correspondant ; et
identifier un puits d'échantillon respectif de la pluralité de puits d'échantillons en se basant au moins en partie sur les données de temporisation de gaz de séparation.

14. Procédé selon l'une des revendications 11 à 13,
a) comprenant en outre les étapes suivantes :
à l'aide d'un détecteur de diffusion, générer un signal de sortie de tension de diffusion indiquant une intensité de la lumière diffusée lorsque le flux d'écoulement de fluide passe à travers le cytomètre en flux pendant une période de temps ;
échantillonner le signal de sortie de tension de diffusion ; et
enregistrer un horodatage et une valeur de tension pour chaque tension échantillonnée du signal de sortie de tension de diffusion qui est supérieure à un seuil d'écart de séparation, dans lequel le seuil d'écart de séparation a une valeur constante, et/ou
b) dans lequel l'au moins un capteur (216, 416A-416L) comprend un ou plusieurs parmi un capteur à ultrasons, un capteur optique, un capteur d'images et un capteur de débit massique.

15. Procédé selon l'une des revendications 11 à 14, dans lequel :
le déplacement de la pluralité d'échantillons dans un flux d'écoulement de fluide dans la voie fluidique (208, 408), comprend le déplacement de la pluralité d'échantillons dans un flux d'écoulement de fluide dans la voie fluidique de l'appareil de cytomètre en flux (200, 400) selon l'une des revendications 1 à 10 ; et
dans lequel
le guidage du flux d'écoulement de fluide échantillon séparé par gaz comportant les échantillons séparés et le gaz de séparation vers et à travers au moins un capteur (216, 416A-416L) et la cuve à circulation (202, 402) d'un cytomètre en flux (200, 400) comprend le guidage du flux d'écoulement de fluide échantillon séparé par gaz comportant les échantillons séparés et le gaz de séparation vers et à travers l'au moins un capteur et la cuve à circulation (202, 402) de l'appareil de cytomètre en flux (200, 400) selon l'une des revendications 1 à 10.
